(19) Europäisches Patentamt
European Patent Office
Office européen des brevets

(11) EP 3 878 838 B1

(12) **EUROPEAN PATENT SPECIFICATION**

(45) Date of publication and mention of the grant of the patent:
**23.07.2025 Bulletin 2025/30**

(21) Application number: **19882335.3**

(22) Date of filing: **07.11.2019**

(51) International Patent Classification (IPC):
***C07C 309/10*** *(2006.01)* ***C09D 175/04*** *(2006.01)*
***C08G 18/38*** *(2006.01)* ***C08G 18/73*** *(2006.01)*
***C08G 18/75*** *(2006.01)* ***C08G 18/76*** *(2006.01)*
***C08G 18/77*** *(2006.01)* ***C08G 18/08*** *(2006.01)*
***C08G 18/62*** *(2006.01)* ***C08G 18/28*** *(2006.01)*
***C08G 18/79*** *(2006.01)* ***C08G 18/70*** *(2006.01)*

(52) Cooperative Patent Classification (CPC):
**C08G 18/775; C08G 18/0828; C08G 18/288; C08G 18/62; C08G 18/706; C08G 18/792; C09D 175/04**

(86) International application number:
**PCT/JP2019/043769**

(87) International publication number:
**WO 2020/096019 (14.05.2020 Gazette 2020/20)**

(54) **POLYISOCYANATE COMPOSITION, COATING COMPOSITION AND COATED SUBSTRATE**

POLYISOCYANATZUSAMMENSETZUNG, BESCHICHTUNGSZUSAMMENSETZUNG UND BESCHICHTETES SUBSTRAT

COMPOSITION DE POLYISOCYANATE, COMPOSITION DE REVÊTEMENT, ET SUBSTRAT REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2018 JP 2018209877**
**06.02.2019 JP 2019020003**

(43) Date of publication of application:
**15.09.2021 Bulletin 2021/37**

(73) Proprietor: **Asahi Kasei Kabushiki Kaisha**
**Tokyo 1000006 (JP)**

(72) Inventors:
- **LI Guan**
  **Tokyo 100-0006 (JP)**
- **NAKAJIMA Kazuko**
  **Tokyo 100-0006 (JP)**
- **YAMAUCHI Masakazu**
  **Tokyo 100-0006 (JP)**

(74) Representative: **Strehl & Partner mbB**
**Maximilianstrasse 54**
**80538 München (DE)**

(56) References cited:
**EP-A1- 3 527 596**
**WO-A1-2018/070371**
**JP-A- 2003 533 566**
**JP-A- 2013 129 722**
**JP-B2- 6 294 136**
**JP-B2- S6 360 377**
**US-A- 3 998 871**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 878 838 B1

## Description

[Technical Field]

The present invention relates to a polyisocyanate composition, a coating composition and a coated substrate.

[Background Art]

In recent years, from the viewpoint of environmental protection, a shift from a two-liquid type urethane coating composition conventionally used as a solvent type paint to an aqueous paint has been desired. However, there is a problem in the two-liquid type urethane coating composition in that the polyisocyanate used as a curing agent is not easily dispersed in water, but easily generate carbon dioxide. Therefore, development of a polyisocyanate having emulsifiability and capable of suppressing a reaction between isocyanate groups and water even in a water-dispersed state is desirable.

PTL1 discloses a reaction product of a polyisocyanate compound with a compound having at least one sulfonic acid group and an isocyanate group.

PTL2 and PTL3 disclose a polyisocyanate composition containing a modified polyisocyanate obtained by reacting an amine salt of a sulfonic acid having a hydroxyl group with a polyisocyanate.

PTL4 and PTL5 disclose a modified polyisocyanate obtained by reacting an aminosulfonic acid having a specific structure with a polyisocyanate.

[Citation List]

[Patent Literature]

PTL1: Japanese Unexamined Patent Application, First Publication No. H8-176267
PTL2: Japanese Unexamined Patent Application, First Publication No. 2015-205957
PTL3: Japanese Unexamined Patent Application, First Publication No. 2016-017157
PTL4: Japanese Patent No. 4806511
PTL5: PCT International Publication No. WO2015/035673

US 3 998 871 A discloses, in an example, the reaction of toluene diisocyanate with polyether polyols to provide an isocyanate-terminated prepolymer, followed by a reaction with sulfuric acid to a sulfonated prepolymer.

[Summary of Invention]

[Technical Problem]

Aqueous two-liquid type urethane coating compositions are used for painting furniture and building materials, residential wood products, wooden floors of houses and school facilities, trains and construction machines, agricultural cars, and the like. There is a demand for polyisocyanate compositions capable of providing a coating film having excellent appearance, hardness, water resistance and stain resistance.

With the polyisocyanate composition described in PTL1, it is difficult to achieve both excellent pot life and dispersibility when dispersed in water or in a water-containing main agent.

PTL2 to 3 disclose that the dispersibility in water can be improved by using a polyisocyanate having a sulfonic acid group. However, since the compatibility between the sulfonic acid group and the polyisocyanate is poor, there is a problem in that the synthesized product becomes turbid. If a highly organic sulfonic acid or an amine salt thereof is used for improving the turbidity, there is a problem in that the appearance of the coated film will be deteriorated, it is necessary to modify a large number of the sulfonic acid or amine salt thereof, and the hardness of the coating film decreases.

PTL 4 to 5 disclose that the hardness of a coating film and the solvent resistance of a coating film are improved by using a modified polyisocyanate obtained by reacting with an aminosulfonic acid having a specific structure. On the other hand, since the aminosulfonic acid having a specific structure has a relatively high hydrophobicity, there is a problem in that the appearance of the coating film is deteriorated. Further, although the hydrophobicity of aminosulfonic acid is relatively high, there is also a problem in that water resistance and stain resistance are poor.

The present invention has been made in view of the above circumstances, and provides a polyisocyanate composition having excellent pot life and dispersibility when dispersed in water or a main agent containing water, and having excellent appearance, hardness and water resistance when formed into a coating film. The present invention also

provides a coating composition and a coated substrate using the polyisocyanate composition.

[Solution to Problem]

The present invention is set out in the claims.

[Advantageous Effects of Invention]

According to the polyisocyanate composition of the above aspect, a polyisocyanate composition having excellent pot life and dispersibility when dispersed in water or a main agent containing water, and having excellent appearance, hardness and water resistance when formed into a coating film can be provided. The coating composition of the above aspect contains the polyisocyanate composition and has excellent appearance, hardness and water resistance when formed into a coating film. The coated substrate of the above aspect contains the coating composition, and the coating film provided in the coated substrate has excellent appearance, hardness and water resistance.

Alternatively, according to the polyisocyanate composition of the above aspect, a polyisocyanate composition having excellent pot life when dispersed in water or a main agent containing water, and having excellent appearance and water resistance when formed into a coating film can be provided. The coating composition of the above aspect contains the polyisocyanate composition and has excellent appearance and water resistance when formed into a coating film. The coating substrate of the above aspect is coated with the coating composition and has excellent appearance and water resistance.

[Description of Embodiments]

Hereinafter, embodiments for carrying out the present invention (hereinafter, referred to as "the present embodiment") will be described in detail. The present invention is not limited to the following embodiments and can be appropriately modified and implemented within the scope of the claims.

<<Polyisocyanate composition>>

The polyisocyanate composition of the present embodiment contains a polyisocyanate having a sulfonic acid anion group in its molecule and a tertiary ammonium cation of an amine compound, wherein the polyisocyanate is at least one selected from the group consisting of an aliphatic polyisocyanate and an alicyclic polyisocyanate, and the tertiary ammonium cation of an amine compound includes a tertiary ammonium cation of at least one amine compound selected from an amine compound represented by the following general formula (1) (hereinafter, may be referred to as "amine compound (1)") and an amine compound represented by the following general formula (2) (hereinafter, may be referred to as "amine compound (2)"), and an amount of the tertiary ammonium cation of the selected amine compound is 70 mol% or more with respect to a total molar amount of the tertiary ammonium cation of all amine compounds in the composition.

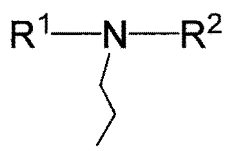

(1)

(In the general formula (1), $R^1$ and $R^2$ are each independently a hydrocarbon group having 1 to 8 carbon atoms which may contain an ether bond, at least one selected from the group consisting of $R^1$ and $R^2$ may contain a ring structure, and $R^1$ and $R^2$ may be bonded to each other to form a ring structure, the ring structure being an aromatic ring, a cycloalkyl group having 5 to 6 carbon atoms, and a 5- or 6-membered ring in which $R^1$ and $R^2$ are bonded to each other.)

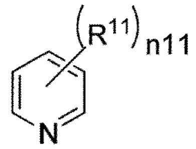

(2)

(In the general formula (2), n11 is an integer of 0 or more and 5 or less, $R^{11}$ is a hydrocarbon group having 1 to 8 carbon atoms which may contain an ether bond, and when n11 is 2 or more, a plurality of $R^{11}$ may be the same as or different from each other.)

By having the above-mentioned constitution, the polyisocyanate composition of the present embodiment achieves excellent pot life and dispersibility when dispersed in water or a main agent containing water, and a coating film having excellent hardness and water resistance can be obtained as shown in Examples described later. Alternatively, the polyisocyanate composition of the present embodiment achieves excellent pot life when dispersed in water or a main agent containing water, and a coating film having excellent appearance and water resistance can be obtained.

The term "pot life" as used herein means a time period after mixing a main agent and a curing agent to prepare a composition and before curing it, in which performance as a coating composition, adhesive or the like is secured. It is also called "usable time". As shown in the Examples described later, the "pot life" can be evaluated by measuring the time during which 80% or more of the isocyanate groups are retained in the coating composition prepared by mixing the polyisocyanate composition (curing agent) of the present embodiment with the main agent.

The constituent components of the polyisocyanate composition of the present embodiment will be described in detail.

<Isocyanate component>

The polyisocyanate composition of the present embodiment usually contains an unreacted polyisocyanate as an isocyanate component, that is, a polyisocyanate having no sulfonic acid anion group in its molecule. Further, unless otherwise specified, various properties of the polyisocyanate composition of the present embodiment, which will be described later, are properties in a state of containing a polyisocyanate having a sulfonic acid anion group in its molecule and an unreacted polyisocyanate (polyisocyanate having no sulfonic acid anion group in its molecule).

Further, in the polyisocyanate composition of the present embodiment, the ratio of the unreacted polyisocyanate to the polyisocyanate having a sulfonic acid anionic group in its molecule, for example, can be calculated from the ratio of isocyanate group having a sulfonic acid anion group in its molecule to 100 mol of isocyanate groups of the raw material polyisocyanate.

[Polyisocyanate having a sulfonic acid anion group in its molecule]

The polyisocyanate having a sulfonic acid anionic group in its molecule contained in the polyisocyanate composition of the present embodiment is a reaction product obtained by reacting a sulfonic acid having an active hydrogen group or an amine salt thereof with a polyisocyanate.

(Polyisocyanate)

The polyisocyanate used for the polyisocyanate having a sulfonic acid anion group in its molecule is at least one selected from the group consisting of an aliphatic polyisocyanate, and an alicyclic polyisocyanate from the viewpoint of being easily available industrially, and examples thereof include polyisocyanates derived from at least one diisocyanate selected from aliphatic diisocyanates and alicyclic diisocyanates.

The aliphatic diisocyanate is not particularly limited, and examples thereof include a 1,4-diisocyanatobutane, 1,5-diisocyanatopentane, ethyl (2,6-diisocyanato) hexanoate, 1,6-diisocyanatohexane (hereinafter, may be referred to as "HDI"), 1,9-diisocyanatononan, 1,12-diisocyanatododecane, and 2,2,4- or 2,4,4-trimethyl-1,6-diisocyanatohexane.

The alicyclic diisocyanate is not particularly limited, and examples thereof include a 1,3- or 1,4-bis (isocyanatomethyl) cyclohexane (hereinafter, may be referred to as "hydrogenated XDI"), 1,3- or 1,4-diisocyanatocyclohexane, 3,5,5-trimethyl-1-isocyanato-3-(isocyanatomethyl) cyclohexane (hereinafter, may be referred to as "IPDI"), 4-4'-diisocyanato-dicyclohexylmethane (hereinafter, may be referred to as "hydrogenated MDI") and 2,5- or 2,6-diisocyanatomethylnorbornane.

Among the examples, the diisocyanate is preferably an HDI, IPDI, hydrogenated XDI or hydrogenated MDI.

The polyisocyanate derived from a diisocyanate is not particularly limited, and examples thereof include the polyisocyanates shown in the following (a) to (h).

(a) Polyisocyanate having a uretdione group obtained by cyclizing and dimerizing two isocyanate groups;
(b) Polyisocyanate having an isocyanurate group or an iminooxadiazidinedione group obtained by cyclizing and trimerizing three isocyanate groups;
(c) Polyisocyanate having a biuret group obtained by reacting three isocyanate groups with one water molecule;
(d) Polyisocyanate having an oxadiazine trione group obtained by reacting two isocyanate groups with one molecule of carbon dioxide;
(e) Polyisocyanate having a plurality of urethane groups obtained by reacting one isocyanate group with one hydroxyl group;
(f) Polyisocyanate having an allophanate group obtained by reacting two isocyanate groups with one hydroxyl group;

(g) Polyisocyanate having an acylurea group obtained by reacting one isocyanate group with one carboxyl group;
(h) Polyisocyanate having a urea group obtained by reacting one isocyanate group with one primary or secondary amine.

Among the examples, the polyisocyanate used for the polyisocyanate having a sulfonic acid anion group in its molecule is preferably a polyisocyanate (b) described above, and more preferably a polyisocyanate having an isocyanurate group.

Further, the polyisocyanate used for the polyisocyanate having a sulfonic acid anion group in its molecule may contain an aliphatic triisocyanate. Examples of the aliphatic triisocyanate include 1,3,6-triisocyanatohexane, 1,8-diisocyanato-4-isocyanatomethyloctane, 2-isocyanatoethyl-2,6-diisocyanato-hexanoate and the like.

Further, these polyisocyanates may be modified with a nonionic hydrophilic group such as an alkoxypolyalkylene glycol, or a vinyl polymer having a hydroxyl group and a nonionic hydrophilic group.

In addition, these polyisocyanates can be used alone or in combination of two or more.

• Method for producing polyisocyanate

The method for producing a polyisocyanate having an isocyanurate group is not particularly limited, and examples thereof include a method in which a diisocyanate is converted to an isocyanurate using a catalyst, the reaction is stopped when a predetermined conversion rate is reached, and unreacted diisocyanate is removed.

Although the catalyst used in the above-mentioned isocyanurate-forming reaction is not particularly limited, a catalyst exhibiting basicity is preferable, and specific examples thereof include hydrooxides and organic weak acids of tetraalkylammonium, hydroxides and organic weak acid salts of hydroxyalkylammonium, alkali metal salts of alkylcarboxylic acids, metal alcolates, aminosilyl group-containing compounds, Mannich bases, combination of tertiary amines and epoxy compounds and phosphorus compounds.

Examples of the tetraalkylammonium include tetramethylammonium and tetraethylammonium.

Examples of the organic weak acid include acetic acid and capric acid. Examples of the hydroxyalkylammonium include trimethylhydroxypropylammonium, trimethylhydroxyethylammonium, triethylhydroxypropylammonium and triethylhydroxyethylammonium.

Examples of the alkylcarboxylic acid include acetic acid, caproic acid, octyl acid and myristic acid.

Examples of the metal constituting the alkali metal salt include tin, zinc and lead.

Examples of the metal alcoholate include sodium alcoholate and potassium alcoholate.

Examples of the aminosilyl group-containing compound include hexamethyldisilazane.

Examples of the phosphorus compound include tributylphosphine.

The amount of these catalysts used is preferably 10 ppm or more and 1.0% or less with respect to the total mass of the raw material diisocyanate (and, if necessary, alcohol). Further, in order to terminate the isocyanurate-forming reaction, the catalyst may be inactivated by addition of an acidic substance that neutralizes the catalyst, thermal decomposition or chemical decomposition. Examples of the acidic substance that neutralizes the catalyst include phosphoric acid and acidic phosphoric acid ester.

The yield of the polyisocyanate generally tends to be 10% by mass or more and 70% by mass or less, and is preferably 35% by mass or more and 60% by mass or less. Polyisocyanates obtained in a higher yield tend to be more viscous. The yield can be calculated from the ratio of the mass of the obtained polyisocyanate to the total mass of the raw material components.

Although the reaction temperature of the isocyanurate-forming reaction is not particularly limited, it is preferably 50°C or higher and 200°C or lower, and more preferably 50°C or higher and 150°C or lower. When the reaction temperature is equal to or higher than the above lower limit, the reaction tends to proceed more easily, and when the reaction temperature is equal to or lower than the above upper limit, side reactions that cause coloring tend to be more suppressed.

After completion of the isocyanurate-forming reaction, it is preferable to remove the unreacted diisocyanate monomer by a thin film evaporator or extraction. Even when the polyisocyanate contains unreacted diisocyanate, the diisocyanate content is preferably 3.0% by mass or less, more preferably 1.0% by mass or less, and even more preferably 0.5% by mass or less, with respect to the total mass of the polyisocyanate. When the residual unreacted diisocyanate monomer concentration is within the above range, the curability tends to be further improved.

[Sulfonic acid with active hydrogen group]

In the sulfonic acid having an active hydrogen group used for producing the polyisocyanate having a sulfonic acid anionic group in its molecule, as the active hydrogen group, an amino group, a carboxyl group, and a hydroxyl group can be mentioned. Among the examples, the active hydrogen group is preferably at least one selected from the group consisting of an amino group and a hydroxyl group.

(Sulfonic acid (4))

When the active hydrogen group is a hydroxyl group, examples of the sulfonic acid having a hydroxyl group include a compound represented by the following general formula (4) (hereinafter, abbreviated as "sulfonic acid (4)").

$$HO-R^4-SO_3H \qquad (4)$$

In the formula (4), $R^4$ is a hydrocarbon group having 1 to 10 carbon atoms which may contain at least one selected from the group consisting of a hydroxyl group, an ether bond, an ester bond, a carbonyl group, and an imino group. $R^4$ may include a ring structure. The ring structure is an aromatic ring, a 5-membered ring or a 6-membered ring containing two nitrogen atoms, or a 5-membered ring or a 6-membered ring containing a nitrogen atom and an oxygen atom.

• $R^4$

In the general formula (4), $R^4$ is a hydroxyl group, an ester bond (-COO-), an ether bond (-O-), a carbonyl group (-C (= O)-), an imino group (-NR-), and a hydrocarbon group having 1 to 10 carbon atoms which may contain at least one selected from the group consisting of a ring structure.

The hydrocarbon group having 1 to 10 carbon atoms may be a divalent aliphatic hydrocarbon group having 1 to 10 carbon atoms, and a divalent aromatic hydrocarbon group having 6 to 10 carbon atoms. The divalent aliphatic hydrocarbon group having 1 to 10 carbon atoms is preferably a chain alkylene group having 1 to 6 carbon atoms. When it is a chain alkylene group having 1 to 6 carbon atoms, it may be a group containing a ring structure as a part of the chain alkylene group. The alkylene group having 1 to 6 carbon atoms may be linear or branched.

Among the examples, $R^4$ is preferably a chain alkylene group having 1 to 6 carbon atoms, a divalent aromatic hydrocarbon group (arylene group) having 6 to 10 carbon atoms, a divalent alkylene group containing an aromatic ring and having 1 to 10 carbon atoms, a divalent alkylene group having 1 to 6 carbon atoms and containing a 5-membered ring or a 6-membered ring containing two nitrogen atoms or a divalent alkylene group having 1 to 6 carbon atoms and containing a 5- or 6-membered ring containing a nitrogen atom and an oxygen atom.

Preferable examples of the sulfonic acid (4) include 2-hydroxyethanesulfonic acid, 3-hydroxypropane sulfonic acid, 4-hydroxybutane sulfonic acid, 5-hydroxypentane sulfonic acid, 6-hydroxyhexane sulfonic acid, hydroxybenzene sulfonic acid, hydroxy (methyl) benzenesulfonic acid, 4-(2-hydroxyethyl)-1-piperazine ethanesulfonic acid, 4-(2-hydroxyethyl)-1-piperazin propanesulfonic acid, 2-hydroxy-3-morpholinopropanesulfonic acid and the like.

In addition, these compounds are only some of the preferred sulfonic acids (4), and the preferred sulfonic acid (4) is not limited thereto.

Further, the sulfonic acids (4) may be used alone, or in combination of two or more.

Among the examples, the sulfonic acid having a hydroxyl group is preferably at least one selected from the group consisting of a 2-hydroxyethanesulfonic acid, a 3-hydroxypropanesulfonic acid, a hydroxybenzenesulfonic acid, and a hydroxy (methyl) benzenesulfonic acid.

When the polyisocyanate composition of the present embodiment contains two or more amine salts of sulfonic acid, the sulfonic acids (4) may be the same as or different from each other.

Further, the sulfonic acid used for the polyisocyanate having a sulfonic acid anionic group in its molecule may form a salt with an amine compound described later.

(Sulfonic acid (5))

When the active hydrogen group is an amino group, examples of the sulfonic acid having an amino group include a compound represented by the following general formula (5) (hereinafter, abbreviated as " sulfonic acid (5) ").

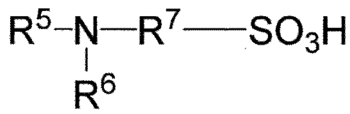

(5)

In the general formula (5), $R^5$ and $R^6$ are each independently a hydrogen atom or a hydrocarbon group having 1 to 12 carbon atoms which may contain a hydroxyl group. $R^5$ and $R^6$ may be the same as or different from each other. At least one of $R^5$ and $R^6$ is a hydrogen atom. R7 is a hydrocarbon group having 1 to 12 carbon atoms which may contain a hydroxyl group.

• $R^5$ and $R^6$

In the general formula (5), $R^5$ and $R^6$ are each independently a hydrogen atom, or a hydrocarbon group having 1 to 12 carbon atoms which may contain a hydroxyl group. $R^5$ and $R^6$ may be the same as or different from each other. At least one of $R^5$ and $R^6$ is a hydrogen atom. That is, when $R^5$ is a hydrocarbon group having 1 to 12 carbon atoms which may contain a hydroxyl group, $R^6$ is a hydrogen atom. Further, when $R^6$ is a hydrocarbon group having 1 to 12 carbon atoms which may contain a hydroxyl group, $R^5$ is a hydrogen atom. Further, both $R^5$ and $R^6$ may be hydrogen atoms.

The hydrocarbon group having 1 to 12 carbon atoms may be a monovalent aliphatic hydrocarbon group having 1 to 12 carbon atoms, or a monovalent aromatic hydrocarbon group having 6 to 12 carbon atoms. The monovalent aliphatic hydrocarbon group having 1 to 12 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Among the examples, $R^5$ and $R^6$ are each preferably a hydrogen atom, a chain alkyl group having 1 to 6 carbon atoms, or a cyclic alkyl group having 3 to 6 carbon atoms.

• $R^7$

$R^7$ is a hydrocarbon group having 1 to 12 carbon atoms which may contain a hydroxyl group.

The hydrocarbon group having 1 to 12 carbon atoms may be a divalent aliphatic hydrocarbon group having 1 to 12 carbon atoms, or a divalent aromatic hydrocarbon group having 6 to 12 carbon atoms. The divalent aliphatic hydrocarbon group having 1 to 12 carbon atoms is preferably a chain alkylene group having 1 to 12 carbon atoms. The chain alkylene group having 1 to 12 carbon atoms may be linear or branched.

Among the examples, $R^7$ is preferably a divalent chain alkylene group having 1 to 6 carbon atoms, or a divalent aromatic hydrocarbon group (arylene group) having 6 to 10 carbon atoms.

Preferable examples of the sulfonic acid (5) include 2-aminoethane sulfonic acid, 3-aminopropane sulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutane sulfonic acid, 2-cyclohexylmethylaminoethanesulfonic acid, 3-cyclohexylmethylaminopropanesulfonic acid, 3-cyclohexylmethylaminoisobutylsulfonic acid, 4-cyclohexylmethylaminobutane sulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylaminobutane sulfonic acid, 2-aminobenzene sulfonic acid, 3-aminobenzene sulfonic acid, 4-aminobenzene sulfonic acid, 2-(methylamino) benzenesulfonic acid, 3-(methylamino) benzenesulfonic acid, 4-(methylamino) benzenesulfonic acid, amino-methylbenzenesulfonic acid, amino-dimethylbenzenesulfonic acid and aminonaphthalenesulfonic acid.

In addition, these compounds are only some of the preferred sulfonic acids (5), and the preferred sulfonic acid (5) is not limited thereto.

Further, the sulfonic acid (5) may be used alone, or in combination of two or more.

Among the examples, the sulfonic acid having an amino group is preferably at least one selected from the group consisting of 2-cyclohexylaminoethanesulfonic acid, 3-cyclohexylaminopropanesulfonic acid, 4-cyclohexylaminobutane sulfonic acid, 3-cyclohexylmethylaminopropanesulfonic acid, 3-(p-methylcyclohexylamino) propanesulfonic acid, 3-(3,3,5-trimethylcyclohexylamino) propanesulfonic acid, 4-(p-methylcyclohexylamino) butane sulfonic acid, 2-aminobenzene sulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid) and 2-aminonaphthalene-4-sulfonic acid.

When the polyisocyanate composition of the present embodiment contains two or more amine salts of sulfonic acid, the sulfonic acids (5) may be the same as or different from each other.

<Amine compound>

The polyisocyanate composition of the present embodiment contains a tertiary ammonium cation of at least one amine compound selected from the amine compounds (1) and (2). The polyisocyanate composition of the present embodiment may contain one of the amine compounds (1) and (2) alone, or contain two or more in combination.

The "tertiary ammonium cation of the amine compounds (1) and (2)" means a cation protonated by coordinating a proton ($H^+$) to "N" (nitrogen atom) in the amine compounds (1) and (2).

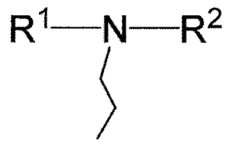

(1)

(In the general formula (1), $R^1$ and $R^2$ are each independently a hydrocarbon group having 1 to 8 carbon atoms which may contain an ether bond. At least one selected from the group consisting of $R^1$ and $R^2$ may contain a ring structure, and $R^1$ and $R^2$ may be bonded to each other to form a ring structure. The ring structure is an aromatic ring, a cycloalkyl group having 5 to 6 carbon atoms, or a 5- or 6-membered ring in which $R^1$ and $R^2$ are bonded to each other.)

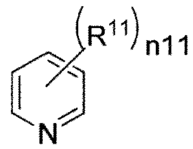

(2)

(In the general formula (2), n11 is an integer of 0 to 5. $R^{11}$ is a hydrocarbon group having 1 to 8 carbon atoms which may contain an ether bond. When n11 is 2 or more, a plurality of $R^{11}$ may be the same as or different from each other.)

Further, in the polyisocyanate composition of the present embodiment, the amine compounds (1) and (2) may form a salt with the above-described sulfonic acid.

[Amine compound (1)]

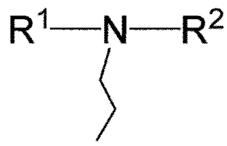

(1)

- $R^1$ and $R^2$

In the general formula (1), $R^1$ and $R^2$ are each independently a hydrocarbon group having 1 to 8 carbon atoms which may contain an ether bond, and at least one selected from the group consisting of $R^1$ and $R^2$ may contain an aromatic ring or a cycloalkyl group having 5 to 6 carbon atoms, and $R^1$ and $R^2$ may be bonded to each other to form a 5- to 6-membered ring.

The hydrocarbon group having 1 to 8 carbon atoms may be a monovalent aliphatic hydrocarbon group having 1 to 8 carbon atoms or a monovalent aromatic hydrocarbon group having 6 carbon atoms. The monovalent aliphatic hydrocarbon group having 1 to 8 carbon atoms is preferably a chain alkyl group having 1 to 8 carbon atoms or a cyclic alkyl group having 3 to 8 carbon atoms. The chain alkyl group having 1 to 8 carbon atoms may be linear or branched.

Preferred examples of the amine compounds (1) include N, N-diethylpropylamine, N, N-dibutylpropylamine, dimethylpropylamine, N-propylpyrrolidine, N-propyl piperidine and N-propylmorpholin, amine compound represented by the following general formula (3) (hereinafter, may be referred to as "amine compound (3)"). These compounds are only some of the preferred amine compounds (1), and the preferred amine compound (1) is not limited thereto. Further, the amine compound (1) may be used alone, or in combination of two or more.

Among the examples, the amine compound (1) is preferably the amine compound (3).

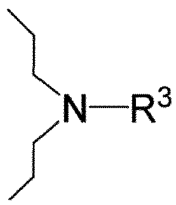

(3)

(In the general formula (3), $R^3$ is an aromatic ring or a hydrocarbon group having 1 to 8 carbon atoms which may contain a cycloalkyl group having 5 or 6 carbon atoms.)

[Amine compound (1-1)]

• $R^3$

$R^3$ is a hydrocarbon group having 1 to 8 carbon atoms which may contain a ring structure. Examples of the hydrocarbon group having 1 to 8 carbon atoms include the same hydrocarbon groups as those exemplified in the above-described "$R^1$ and $R^2$".

Preferred examples of the amine compound (1-1) include a N, N-dipropyloctylamine and tripropylamine. In addition, these compounds are only some of the preferred amine compounds (1-1), and the preferred amine compound (1-1) is not limited thereto. Further, the amine compound (1-1) may be used alone, or in combination of two or more.

[Amine compound (2)]

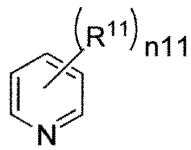

(2)

(In the general formula (2), n11 is an integer of 0 to 5. $R^{11}$ is a hydrocarbon group having 1 to 8 carbon atoms which may contain an ether bond. When n11 is 2 or more, a plurality of $R^{11}$ may be the same as or different from each other.)

Further, in the polyisocyanate composition of the present embodiment, the amine compound (2) may form a salt with the above-described sulfonic acid.

• N11

In the general formula (2), the pyridine ring may be unsubstituted or may be substituted with a substituent $R^{11}$. n11 represents the number of substituents $R^{11}$, and is an integer of 0 to 5, and preferably an integer of 1 to 3. When n11 is 0, the pyridine ring is unsubstituted.

• $R^{11}$

In the general formula (2) , $R^{11}$ is a hydrocarbon group having 1 to 8 carbon atoms which may contain an ether bond (-O-). When n11 is 2 or more, a plurality of $R^{11}$ may be the same as or different from each other.

The hydrocarbon group having 1 to 8 carbon atoms may be a monovalent aliphatic hydrocarbon group having 1 to 8 carbon atoms, or a monovalent aromatic hydrocarbon group having 6 to 12 carbon atoms. The monovalent aliphatic hydrocarbon group having 1 to 8 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Among the examples, $R^{11}$ is preferably a chain alkyl group having 1 to 6 carbon atoms, more preferably a chain alkyl group having 1 to 4 carbon atoms, and even more preferably a linear alkyl group having 1 to 4 carbon atoms.

Preferred examples of the amine compound (2) include pyridine, 2-picoline, 3-picoline, 4-picoline, 2-ethylpyridine, 3-ethylpyridine, 4-ethylpyridine, 2-propylpyridine, 3-propylpyridine, 4-propylpyridine, 4-sec-propylpyridine, 4-tert-propylpyridine, 2-butyl pyridine, 3-butyl pyridine, 4-butyl pyridine, 4-sec-butyl pyridine, 4-tert-butyl pyridine, 2,6-lutidine, 2,3-lutidine, 2,4-lutidine, 2,5-lutidine, 3,4-lutidine, 3,5-lutidine, 2,4,6-trimethylpyridine, 2,3,5-trimethylpyridine, 5-ethyl-2-picoline, 3,5-diethylpyridine, 2-(3-pentyl) pyridine and 4-(3-pentyl) pyridine.

In addition, these compounds are only some of the preferred amine compounds (2), and the preferred amine compound (2) is not limited thereto.

Further, the amine compound may be used alone, or in combination of two or more.

Among the examples, the amine compound (2) is preferably at least one selected from the group consisting of 4-picoline, 4-ethylpyridine, 3-propylpyridine, 4-propylpyridine, 3-butyl pyridine, 4-butyl pyridine, 2,4,6-trimethylpyridine, 2,3,5-trimethylpyridine, 5-ethyl-2-picoline and 3,5-diethylpyridine.

When the polyisocyanate composition of the present embodiment contains two or more amine salts of sulfonic acid, the amine compounds (2) may be the same as or different from each other.

[Other amine compounds]

The polyisocyanate composition of the present embodiment may contain a tertiary ammonium cation of other amine compounds in addition to the tertiary ammonium cation of the amine compounds (1) and (2).
Said other amine compounds are not particularly limited as long as they are other than the above-described amine compounds (1) and (2). Specific examples of said other amine compounds include those shown in the following (a) to (d). Further, these other amine compounds may be used alone or in combination of two or more.

(a) Tertiary amines having a chain aliphatic hydrocarbon group such as trimethylamine, N, N-dimethylethylamine, N, N-dimethylisopropylamine, N, N-dimethylbutylamine, N, N-dimethylisobutylamine, N, N-dimethylpentylamine, N, N-dimethylhexylamine, N, N-diethylmethylamine, triethylamine, N, N-diethylisopropylamine, N, N-diethylbutylamine, N, N-diethylisobutylamine, N, N-diisopropylethylamine, N, N-dimethylallylamine, N-methyldialylamine, N, N-dimethylheptylamine, N, N-dimethyloctylamine, N, N-dimethyl-2-ethylhexylamine, N, N-dimethylnonylamine, N, N-dimethyldecylamine, N, N-dimethylundecylamine, N, N-dimethyldodecylamine, N, N-dimethyltridecylamine, N, N-dimethylstearylamine, N, N-diethylpentylamine, N, N-diethylhexylamine, N, N-diethylheptylamine, N, N-diethyloctylamine, N, N-diethyl-2-ethylhexylamine, N, N-diethylnonylamine, N, N-diethyldecylamine, N, N-diethylundecylamine, N, N-diethyldodecylamine, N, N-diethyltridecylamine, N, N-diethylstearylamine, N, N-diisopropyl-2-ethylhexylamine, N, N-dibutylmethylamine, N, N-dibutylethylamine, tributylamine, N, N-dibutylpentylamine, N, N-dibutylhexylamine, N, N-dibutyl heptylamine, N, N-dibutyloctylamine, N, N-dibutyl-2-ethylhexylamine, N, N-dibutylnonylamine, N, N-dibutyldecylamine, N, N-dibutylundecylamine, N, N-dibutyldodecylamine, N, N-dibutyltridecylamine, N, N-dibutylstearylamine, triamylamine or trihexylamine;
(b) Tertiary amines having a cyclic aliphatic hydrocarbon group such as N, N-dimethylcyclohexylamine, N, N-diethylcyclohexylamine, N, N-dicyclohexylmethylamine, N, N-dicyclohexylethylamine or tricyclohexylamine;
(c) Tertiary amines having aromatic hydrocarbon groups such as N, N-dimethylphenylamine, N, N-dimethylbenzylamine, N, N-diethylbenzylamine, N, N-dibenzylmethylamine, tribenzylamine, N, N-dimethyl-4-methylbenzylamine, N, N-dimethylphenylamine, N, N-diethylphenylamine, N, N-diphenylmethylamine or the like;
(d) Cyclic amines such as N-methylpyrrolidine, N-ethylpyrrolidine, N-propylpyrrolidine, N-Butylpyrrolidine, N-Methylpiperidin, N-ethylpiperidine, N-propyl piperidine, N-methylmorpholine, N-ethylmorpholine, N-propylmorpholin, N-butyl morpholine, N-sec-butyl morpholine, N-tert-butyl morpholine, N-isobutyl morpholine or quinuclidine.

In the polyisocyanate composition of the present embodiment, in the case of containing a tertiary ammonium cation other than the amine compound (1) and/or (2), the amount of the tertiary ammonium cations of the amine compounds (1) and/or (2) is 70 mol% or more, preferably 80 mol% or more, more preferably 90 mol% or more, even more preferably 91 mol% or more, still even more preferably 99 mol% or more, and particularly preferably 100 mol%, with respect to the total molar amount of the tertiary ammonium cations of all amine compounds in the composition.
When the amount of the tertiary ammonium cation of the amine compounds (1) and/or (2) is equal to or higher than the lower limit, as shown in Examples described later, excellent pot life and dispersibility when dispersed in water or a main agent containing water can be achieved, and a coating film having excellent appearance, hardness and water resistance can be obtained. Alternatively, excellent pot life when dispersed in water or a main agent containing water can be achieved, and a coating film having excellent appearance and water resistance can be obtained.

<Method for producing amine salt of sulfonic acid>

When the sulfonic acid forms a salt with the amine compound, that is, when it is an amine salt of the sulfonic acid, the amine salt of the sulfonic acid can be obtained by mixing a sulfonic acid having an active hydrogen group and an amine compound to cause a neutralization reaction.
The neutralization reaction may be carried out in advance before the reaction with the polyisocyanate. Alternatively, it may be carried out at the same time as the reaction with the polyisocyanate. Alternatively, the amine compound may be added after reacting the polyisocyanate with a sulfonic acid having an active hydrogen group.
When the active hydrogen group is a hydroxyl group, the neutralization reaction is preferably carried out in advance before the reaction with the polyisocyanate. When the active hydrogen group is an amino group, the neutralization reaction is preferably carried out at the same time as the reaction with the polyisocyanate, or carried out by adding the amine compound after reacting the polyisocyanate with the sulfonic acid having an active hydrogen group.
When the active hydrogen group is a hydroxyl group, in the neutralization reaction, the mixing ratio of the sulfonic acid having a hydroxyl group and the amine compound (sulfonic acid/amine compound having a hydroxyl group) is 0.5 or more and 2 or less, and preferably 0.8 or more and 1.5 or less.
When the neutralization reaction is carried out in advance, the temperature and time can be appropriately determined according to the progress of the reaction, and the temperature is usually preferably about 0°C or higher and

100°C or lower, and the mixing time is usually preferably about 10 minutes or longer and about 24 hours or less.

. The solvent used in the preparation of the amine salt of the sulfonic acid having an active hydrogen group is preferably water or a hydrophilic solvent. The hydrophilic solvent is not particularly limited, and examples thereof include alcohols, ether alcohols, ketones and amide-based solvents. These solvents can be used alone or in combination.

Examples of the alcohols include methanol, ethanol, propanol, butanol, and isopropanol.

Examples of the ether alcohols include ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether and dipropylene glycol monomethyl ether.

Examples of the ketones include acetone, methyl ethyl ketone and methyl isobutyl ketone.

Examples of the amide-based solvents include N, N-dimethylformamide and N, N-dimethylacetamide.

After the neutralization reaction, it is preferable to remove water or the hydrophilic solvent.

<Properties of polyisocyanate composition>

From the viewpoint of emulsifying property and coating film physical properties, it is preferable that the isocyanate group be modified at a ratio of 0.25 mol or more and 50 mol or less with the sulfonic acid having an active hydrogen group, preferably at a ratio of 0.5 mol or more and 20 mol or less, more preferably at a ratio of 1 mol or more and 10 mol or less, with respect to 100 mol of the isocyanate group of the raw material polyisocyanate.

Further, from the viewpoint of solvent resistance of the coating film, the amount of the isocyanate group of the polyisocyanate composition of the present embodiment is preferably 10% by mass or more and 25% by mass or less, and more preferably 15% by mass or more and 24% by mass or less, when the non-volatile content is 100% by mass. The method for controlling the isocyanate group content within the above range is not particularly limited, and examples thereof include a method for adjusting the blending ratio of the sulfonic acid and polyisocyanate.

The number-average molecular weight of the polyisocyanate (including the polyisocyanate having a sulfonic acid anionic group in its molecule and the unreacted polyisocyanate) used in the polyisocyanate composition of the present embodiment is preferably 450 or more and 2,000 or less, more preferably 500 or more and 1,800 or less, and even more preferably 550 or more and 1,550 or less from the viewpoint of solvent resistance of the coating film. The method for controlling the number-average molecular weight within the above range is not particularly limited, and examples thereof include a method for adjusting the blending ratio of the sulfonic acid, the amine compound, and the polyisocyanate.

The number-average molecular weight can be measured using, for example, gel permeation chromatography (GPC).

The average number of functional groups of the isocyanate groups of the polyisocyanate (including modified polyisocyanate and unreacted polyisocyanate) used in the polyisocyanate composition of the present embodiment is preferably 1.8 or more and 6.2 or less, more preferably 2.0 or more and 5.6 or less, and even more preferably 2.5 or more and 4.6 or less from the viewpoint of solvent resistance of the coating film and the isocyanate group retention rate. The method for controlling the average number of the functional groups within the above range is not particularly limited, and examples thereof include a method for adjusting the blending ratio of the sulfonic acid, the amine compound, and the polyisocyanate.

**In** this embodiment, the isocyanate group content, the non-volatile content, and the average number of functional groups of the isocyanate groups can be measured by the methods described in the Examples later.

<Other components>

The polyisocyanate composition of the present embodiment is a composition containing the above-mentioned polyisocyanate having a sulfonic acid anion group in its molecule, an unreacted polyisocyanate, and a tertiary ammonium cation of the amine compound (1) and/or (2). The polyisocyanate composition of the present embodiment may contain other components in addition to the above-mentioned polyisocyanate having a sulfonic acid anion group in its molecule, unreacted polyisocyanate, and the tertiary ammonium cation of the amine compounds (1) and/or (2). Said other components are not particularly limited, and examples thereof include solvents, antioxidants, light stabilizers, polymerization inhibitors and surfactants.

The solvent used in the polyisocyanate composition of the present embodiment may be a hydrophilic solvent or a hydrophobic solvent. These solvents can be used alone or in combination.

The hydrophobic solvent is not particularly limited, and examples thereof include a mineral spirit, solvent naphtha, LAWS (Low Aromatic White Spirit), HAWS (High Aromatic White Spirit), toluene, xylene, cyclohexane, esters, ketones, and amides.

Examples of the esters include ethyl acetate and butyl acetate.

Examples of the ketones include acetone, methyl ethyl ketone, methyl isobutyl ketone and cyclohexanone.

Examples of the amides include N, N-dimethylformamide and N, N-dimethylacetamide.

The hydrophilic solvent is not particularly limited, and examples thereof include alcohols, ethers, and esters of ether alcohols.

Examples of the alcohols include methanol, ethanol, propanol, isopropanol and 2-ethylhexanol.

Examples of the ethers include diethylene glycol dimethyl ether, diethylene glycol diethyl ether, diethylene glycol dibutyl ether and dipropylene glycol dimethyl ether.

Examples of the esters of ether alcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate and dipropylene glycol monomethyl ether acetate.

In the polyisocyanate composition of the present embodiment, the amount of the solvent is preferably 0% by mass or more and 90% by mass or less, more preferably 0% by mass or more and 50% by mass or more, even more preferably 0% by mass or more and 30% by mass or less with respect to the total mass of the polyisocyanate composition of the present embodiment.

Examples of the antioxidant and the light stabilizer include those shown in the following (a) to (e). These may be contained alone or in combination of two or more.

(a) Aliphatic, aromatic or alkyl group-substituted aromatic esters of phosphoric acid or phosphorous acid, and hypophosphorous acid derivatives;
(b) Phosphorus compounds such as phenylphosphonic acid, phenylphosphinic acid, diphenylphosphonic acid, polyphosphonate, dialkyl pentaerythritol diphosphite or dialkyl bisphenol A diphosphite;
(c) Phenolic derivatives (particularly hindered phenol compounds);
(d) Sulfur-containing compounds such as a thioether-based compound, dithioate salt-based compound, mercaptobenzimidazole-based compound, thiocarbanilide-based compound or thiodipropionic acid ester;
(e) Tin-based compounds such as sumerate or dibutyltin monoxide.

Examples of the polymerization inhibitor include hydroquinones, phenols, cresols, catechols and benzoquinones and the like. Specific examples of the polymerization inhibitor include benzoquinone, p-benzoquinone, p-toluquinone, p-xyloquinone, naphthoquinone, 2,6-dichloroquinone, hydroquinone, trimethylhydroquinone, catechol, p-t-butyl catechol, 2,5-di-t-butylhydroquinone, monomethylhydroquinone, p-methoxyphenol, 2,6-di-t-butyl-p-cresol and hydroquinone monomethyl ether. These examples may be contained alone or in combination of two or more.

Examples of the surfactant include known anionic surfactants, cationic surfactants and amphoteric surfactants.

**In** the polyisocyanate composition of the present embodiment, the total content of the antioxidant, light stabilizer, polymerization inhibitor and the surfactant is preferably 0 to 10% by mass, more preferably 0 to 5% by mass, and even more preferably 0 to 2% by mass with respect to the total amount of the polyisocyanate composition of the present embodiment.

<<Method for Producing Polyisocyanate Composition>>

The method for producing the polyisocyanate composition of the present embodiment preferably includes, for example, a step of (A) mixing and reacting an amine salt of a sulfonic acid having an active hydrogen group with a polyisocyanate.

Alternatively, the method for producing the polyisocyanate composition of the present embodiment preferably includes, for example, a step (B) of mixing and reacting a sulfonic acid having an active hydrogen group, a polyisocyanate, and the above-described compound (1) and or (2).

In step (A), it is preferable that the amine salt of the sulfonic acid be added to the polyisocyanate after being adjusted in advance.

In step (B), the sulfonic acid having an active hydrogen group and the amine compounds may be simultaneously added to the polyisocyanate, or may be added in order.

In particular, in the case where the active hydrogen group is a hydroxyl group, step (A) is preferable, and it is more preferable that the amine salt of the sulfonic acid be added to the polyisocyanate after being adjusted in advance.

In addition, in particular, in the case where the active hydrogen group is an amino group, step (B) is preferable.

In the reaction step, the mixing ratio of the sulfonic acid having an active hydrogen group or amine salt thereof to the polyisocyanate is preferably such that the molar ratio of isocyanate group/active hydrogen group is 2 to 400, more preferably 5 to 200, and even more preferably 10 to 100 from the viewpoint of the emulsifiability and the coating film physical properties.

In the reaction step, although the reaction temperature and the reaction time can be appropriately determined according to the progress of the reaction, the reaction temperature is preferably 0°C to 150°C, and the reaction time is preferably 30 minutes to 48 hours.

In addition, in the reaction step, ordinary and known catalysts may be used in some cases. Although the catalyst is not particularly limited, examples thereof include those shown in the following (a) to (f). These examples may be used alone or in combination.

(a) Organotin compounds such as tin octoate, tin 2-ethyl-1-hexanoate, tin ethyl caproate, tin laurate, tin palmitate, butyl tin oxide, dibutyltin dichloride, dibutyltin diacetate, dibutyltin dimaleate, dibutyltin dilaurate, dioctyltin diacetate or dioctyltin dilaurate;
(b) Organic zinc compounds such as zinc chloride, zinc octoate, zinc 2-ethyl-1-hexanoate, zinc 2-ethylcaproate, zinc stearate, zinc naphthenate or zinc acetylacetonate;
(c) Organic titanium compounds;
(d) Organic zirconium compounds;
(e) Tertiary amines such as triethylamine, tributylamine, N, N-diisopropylethylamine or N, N-dimethylethanolamine;
(f) Diamines such as triethylenediamine, tetramethylethylenediamine or 1,4-diazabicyclo [2.2.2] octane.

In the method for producing the polyisocyanate composition of the present embodiment, a solvent may be used or may not be used. The solvent used in the method for producing the polyisocyanate composition of the present embodiment may be a hydrophilic solvent or a hydrophobic solvent. As the hydrophilic solvent and the hydrophobic solvent, the same as those exemplified above for the other components can be mentioned.

In addition, in the method for producing the polyisocyanate composition of the present embodiment, at least one selected from the group consisting of an antioxidant, a light stabilizer, a polymerization inhibitor and a surfactant may be used in addition to the sulfonic acid having an active hydrogen group, the polyisocyanate and the amine compound. As the antioxidant, light stabilizer, polymerization inhibitor and surfactant, the same as those exemplified for the other components above can be mentioned.

<< Coating composition >>

The coating composition of the present embodiment includes the polyisocyanate composition described above.

Although the coating composition of the present embodiment may be used as an organic solvent-based coating composition, it is preferable to be used as an aqueous coating composition in which resins as coating film-forming components are dissolved or dispersed in a medium mainly containing water. In particular, the coating composition of the present embodiment may also be used for coating materials for buildings, coating materials for automobiles, coating materials for automobile repair, coating materials for plastic, pressure-sensitive adhesives, adhesives, building materials, household aqueous coating materials, other coating agents, sealing agents, ink, casting materials, elastomers, forms, plastic raw materials, and fiber treatment agents.

<Resins>

Although the resins as the main component are not particularly limited, examples thereof include acrylic resins, polyester resins, polyether resins, epoxy resins, fluorine resins, polyurethane resins, polyvinylidene chloride copolymer, polyvinyl chloride copolymer, vinyl acetate copolymer, acrylonitrile butadiene copolymer, polybutadiene copolymer and styrene butadiene copolymer.

Among the examples, acrylic resins or polyester resins are preferable as the resins.

(Acrylic resins)

Although the acrylic resins are not particularly limited, examples thereof include acrylic resins obtained by polymerizing a single polymerizable monomer or a mixture of polymerizable monomers selected from the monomers shown in the following (a) to (e) and the like. These acrylic resins may be used alone or in combination.

(a) (Meth) acrylic acid esters such as (meth) acrylate, ethyl (meth) acrylate, isopropyl (meth) acrylate, (meth) acrylate, n-butyl (meth) acrylate, 2-ethylhexyl (meth) acrylate or lauryl (meth) acrylate;
(b) (Meth) acrylic acid esters having an active hydrogen such as (meth) acrylic acid-2-hydroxyethyl, (meth)acrylic acid-2-hydroxypropyl, (meth) acrylic acid-2-hydroxybutyl, (meth) acrylic acid-3-hydroxypropyl or (meth) acrylic acid-4-hydroxybutyl;
(c) Unsaturated carboxylic acids such as acrylic acid, methacrylic acid, maleic acid or itaconic acid;
(d) Unsaturated amides such as acrylamide, N-methylol acrylamide or diacetone acrylamide;
(e) Other polymerizable monomers such as glycidyl methacrylate, styrene, vinyl toluene, vinyl acetate, acrylonitrile, dibutyl fumarate, p-styrene sulfonic acid or allyl sulfosuccinic acid.

As a polymerization method thereof, although the emulsion polymerization is generally used, suspension polymerization, dispersion polymerization, solution polymerization may also be used. In the emulsion polymerization, it is also possible to perform stepwise polymerization.

(Polyester resins)

Although the polyester resins are not particularly limited, examples thereof include polyester resins obtained by performing a condensation reaction of a single carboxylic acid or a mixture of carboxylic acids with a single polyhydric alcohol or a mixture of polyhydric alcohols.
As the carboxylic acid, for example, succinic acid, adipic acid, sebacic acid, dimer acid, maleic anhydride, phthalic anhydride, isophthalic acid, terephthalic acid, trimellitic acid, pyromellitic acid or the like can be mentioned.
As the polyhydric alcohol, for example, diols, triols or tetraols can be mentioned.
As the diols, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol or 2,2-diethyl-1,3-propanediol can be mentioned.
As the triols, for example, glycerin or trimethylol propane can be mentioned.
As the tetraols, for example, diglycerin, dimethylol propane or pentaerythritol can be mentioned.
Alternatively, for example, polycaprolactones obtained by performing a ring-opening polymerization of ε-caprolactone onto a hydroxyl group of a low-molecular-weight polyol can also be used as the polyester resins.

(Polyether resins)

Examples of the polyether resins include those shown in the following (a) to (d).

(a) Polyether polyols obtained by adding a single alkylene oxide or a mixture of alkylene oxides to a single polyvalent hydroxy compound or a mixture of polyvalent hydroxy compounds using a strongly basic catalyst.
(b) Polyether polyols obtained by reacting a polyamine compound with an alkylene oxide;
(c) Polyether polyols obtained by ring-opening polymerization of cyclic ethers;
(d) So-called polymer polyols obtained by polymerizing acrylamide using the polyether polyols obtained in (a) to (c) as a medium.

Examples of the polyvalent hydroxy compound in the above-described (b) include those shown in the following (i) to (vi).

(i) Diglycerin, ditrimethylolpropane, pentaerythritol or dipentaerythritol;
(ii) Sugar alcohol-based compounds such as erythritol, D-threitol, L-arabinitol, ribitol, xylitol, sorbitol, mannitol, galactitol or ramnitol;
(iii) Monosaccharides such as arabinose, ribose, xylose, glucose, mannose, galactose, fructose, sorbose, rhamnose, fucose or ribosease;
(iv) Disaccharides such as trehalose, sucrose, maltose, cellobiose, gentiobiose, lactose or melibiose;
(v) Trisaccharides such as raffinose, gentianose or melezitose;
(vi) Tetrasaccharides such as stachyose.

Examples of the strong basic catalyst in (a) include hydroxides of alkali metals, alcoholates and alkylamines. Examples of alkali metals include lithium, sodium and potassium.
Examples of the alkylene oxide in the above-described (a) include ethylene oxide, propylene oxide, butylene oxide, cyclohexene oxide and styrene oxide.
Examples of the polyamine compound in the above-described (b) include ethylenediamines.
Examples of the cyclic ether in the above-described (c) include tetrahydrofuran.
In addition, in the coating composition of the present embodiment, these resins may be used in combination with resins such as a melamine-based curing agent, a urethane dispersion or a urethane acrylic emulsion according to need.
In addition, it is preferable that these resins be emulsified, dispersed or dissolved in water. For this reason, it is possible to neutralize the carboxyl group and sulfonic group contained in the resin.
Although the neutralizing agent for neutralizing the carboxyl group and sulfonic group is not particularly limited, examples thereof include ammonia and a water-soluble amino compound.
As the water-soluble amino compound, for example, monoethanolamine, ethylamine, dimethylamine, diethylamine, triethylamine, propyl amine, dipropylamine, isopropylamine, diisopropylamine, triethanolamine, butylamine, dibutylamine, 2-ethylhexylamine, ethylenediamine, propylene diamine, methylethanolamine, dimethylethanolamine, diethylethanolamine or morpholine can be mentioned. These examples may be used alone or in combination of two or more.

Among the examples, the neutralizing agent is preferably a tertiary amine, more preferably triethylamine or dimethylethanolamine.

<Other components>

In addition to the above-described polyisocyanate composition and resins, the coating composition of the present embodiment may further include additives that are generally added to coating materials. Examples of the additives include inorganic pigments, organic pigments, extender pigments, silane coupling agents, titanium coupling agents, organophosphates, organic phosphites, thickeners, leveling agents, thixotroping agents, antifoaming agents, freezing stabilizers, matting agents, crosslinking reaction catalysts (a catalyst for curing promotion), skinning-preventing agents, dispersants, wetting agents, fillers, plasticizers, lubricants, reducing agents, preservatives, mildewproofing agents, deodorants, anti-yellowing agents, ultraviolet absorbers, antistatic agents or charge control agents and sedimentation-preventing agents. These additives may be added alone, or in combination of two or more.

Examples of the crosslinking reaction catalyst (catalyst for curing promotion) include those shown in the following (a) or (b), but are not limited to them.

(a) Metal salts such as dibutyltin dilaurate, tin 2-ethylhexanoate, zinc 2-ethylhexanoate or cobalt salt;

(b) Tertiary amines such as triethylamine, pyridine, methyl pyridine, benzyl dimethyl amine, N, N-dimethylcyclohexyl amine, N-methyl piperidine, pentamethyldiethylene triamine, N, N'-endethylene piperazine or N, N'-dimethylpiperazine.

The coating composition of the present embodiment may further include a surfactant in addition to the above-described polyisocyanate composition and resins in order to improve the dispersibility in the coating material.

The coating composition of the present embodiment may further include an antioxidant, a light stabilizer, or a polymerization inhibitor in addition to the above-described polyisocyanate composition and resins in order to improve the storage stability of the paint.

<<Coated Substrate>>

The coated substrate of the present embodiment is a coated substrate coated with the above-described coating composition. The coated substrate of the present embodiment preferably has a coating layer containing the above-described coating composition.

The coated substrate of the present embodiment may include a desired substrate and optionally a conventional primer prior to the coating.

Examples of the substrate include metals, wood, glass, stones, ceramic materials, concrete, rigid and flexible plastics, fiber products, leather products and paper.

[Examples]

Hereinafter, the present invention will be described in more detail with reference to Examples and Comparative Examples, but the present invention is not limited to the following Examples.

The physical properties and evaluation of the polyisocyanate composition in the Examples and Comparative Examples were measured as follows. Unless otherwise specified, "parts" and "%" mean "parts by mass" and "% by mass".

<Measurement method>

[Physical property 1] Viscosity

The viscosity was measured at 25°C with an E-type viscometer (manufactured by Tokimec Co., Ltd.). A standard rotor (1° 34' × R24) was used. The number of rotations was as follows.

(Rotation speed)

100 rpm (in the case of less than 128 mPa·s)
50 rpm (in the case of 128 mPa·s or more and less than 256 mPa·s)
20 rpm (in the case of 256 mPa·s or more and less than 640 mPa·s)
10 rpm (in the case of 640 mPa·s or more and less than 1,280 mPa·s)
5 rpm (in the case of 1,280 mPa·s or more and less than 2,560 mPa·s)
2.5 rpm (in the case of 2,560mPa·s or more and less than 5,120 mPa·s)

[Physical property 2] Isocyanate group content (NCO%)

The polyisocyanate compositions obtained in the Examples and Comparative Examples were used as samples, and the measurement of the isocyanate group content was carried out according to the method described in JIS K7301-1995 (Torylene isocyanate type prepolymer test method for thermosetting urethane elastomer). A more specific method for measuring the isocyanate group content (NCO%) is shown below.

(1) 1 g (Wg) of a sample was collected in a 200 mL Erlenmeyer flask, and 20 mL of toluene was added to the flask to dissolve the sample. (2) After that, 20 mL of a 2.0 N di-n-butylamine-toluene solution was added to the flask, and the flask was allowed to stand for 15 minutes. (3) 70 mL of 2-propanol was added to the flask and dissolved to obtain a solution. (4) The solution obtained in (3) above was titrated with 1 mol/L hydrochloric acid to determine a sample titration amount (V1 mL). (5) The measurement was carried out in the same manner as in (1) to (3) above even when no sample was added to determine a blank titration amount (V0 mL).

The isocyanate group content (NCO%) was calculated from the sample titration amount and the blank titration amount obtained above using the calculation equation (A) shown below.

$$\text{Isocyanate group content (\% by mass)} = (V0-V1) \times 42 / [W (1g) \times 1000] \times 100 \quad (A)$$

[Physical property 3] Non-volatile content

Each of the polyisocyanate compositions obtained in Examples and Comparative Examples was used as a sample. When dilution with a solvent was done, the nonvolatile content was calculated by the following method. First, a mass of an aluminum cup (WO g) was accurately weighed, and approximately 1 g of the sample was collected therein to accurately weigh the cup prior to heat drying (W1 g). Then, the cup containing the sample was heated in a dryer at 105°C for 3 hours. After that, the cup subjected to heat drying was cooled to room temperature, and the mass of the cup was accurately weighed again (W2 g). Next, the mass% of the dry residue in the sample which was determined as the nonvolatile content was calculated by the following calculation equation (B) as the nonvolatile content. In addition, when dilution with a solvent was not done, the nonvolatile content was assumed to be substantially 100%.

$$\text{Non-volatile content (\% by mass)} = (W2-W0) / (W1-W0) \times 100 \quad (B)$$

[Physical property 4] Number-average molecular weight (Mn)

The number-average molecular weight of the polyisocyanate composition was obtained by measuring the polystyrene-equivalent number-average molecular weight by GPC measurement under the measurement conditions shown below.

(Measurement condition)

Apparatus: Tosoh Corporation, HLC-8120GPC (trade name)
Column: Tosoh Corporation,

$$\text{TSKgel SuperH1000 (trade name)} \times 1$$

$$\text{TSKgel SuperH2000 (trade name)} \times 1$$

$$\text{TSKgel SuperH3000 (trade name)} \times 1$$

Carrier: Tetrahydrofuran
Detection method: Differential refractometer

[Physical property 5] Average number of functional groups of isocyanate group (average number of NCO functional group)

The average number of functional groups of the isocyanate group is the number of isocyanate functional groups statistically possessed in one molecule of the polyisocyanate, and can be calculated from the number-average molecular weight (Mn) of the polyisocyanate obtained in "Physical property 4" and the isocyanate group content (NCO%) obtained in "Physical property 2" using the following calculation equation (C).

$$\text{Average number of functional groups} = \text{Mn} \times \text{NCO\%} / 4200 \qquad \text{(C)}$$

<Evaluation method>

[Evaluation 1] Appearance of polyisocyanate composition

The presence or absence of foreign matter and turbidity in the polyisocyanate compositions obtained in the Examples and Comparative Examples was visually confirmed and evaluated according to the following evaluation criteria.

(Evaluation criteria)

o: Transparent uniform liquid
×: Foreign matter or turbidity

[Evaluation 2] Water dispersibility of polyisocyanate composition

The polyisocyanate compositions obtained in the Examples and Comparative Examples were used as samples, and the water dispersibility was evaluated using the method shown below.

(1) The mass of the 100 mL flask and Yoshino paper was measured (WO g). (2) The polyisocyanate composition was collected in a 100 mL flask so as to have a solid content of 16 g (W2 g), and 24 g of deionized water was added. (3) Using propeller blades, the solution in the 100 mL flask was stirred at 200 rpm for 3 minutes, and then filtered through the Yoshino paper weighed in (1). (4) The filtration residue remaining on Yoshino paper and the residue remaining on the 100 mL flask were combined and heated in a dryer at 105°C for 1 hour to determine the mass (g) (W1 g). (5) Using the following calculation equation (D), the ratio of the polyisocyanate composition dispersed in water was determined. In the calculation equation (D), Y is a non-volatile component (mass%).

$$\text{Percentage dispersed in water (mass\%)} = \{1\text{-}(\text{W2 (g) -W0 (g)}) / (\text{W2 (16g)} \times \text{Y})\} \times 100 \qquad \text{(D)}$$

(6) Next, the water dispersibility was evaluated according to the following evaluation criteria.

(Evaluation criteria)

o: 80% by mass or more
Δ: 60% by mass or more and less than 80% by mass
×: Less than 60% by mass

[Preparation of coating composition]

40 g of acrylic polyol aqueous dispersion (product name: Setaqua 6510, hydroxyl value per resin: 138 mgKOH/g, manufactured by Allnex) was weighed and stored in a container. Next, each of the polyisocyanate compositions was added so that the molar ratio (NCO/OH) of the isocyanate groups in the polyisocyanate compositions obtained in the Examples and Comparative Examples to the hydroxyl groups in the acrylic polyol aqueous dispersion was 1.25. Further, deionized water was added so that the solid content in the coating composition was 42% by mass, and the mixture was stirred at 600 rpm for 10 minutes using a propeller blade to obtain coating compositions. The following evaluation was carried out using the prepared coating composition.

[Evaluation 3] Pot life

The change in the concentration of isocyanate groups in the coating composition was calculated from the intensity ratio of the absorption peak of isocyanate (around 2,217 $cm^{-1}$ wave number) to the absorption peak of isocyanurate (around 1686 $cm^{-1}$ wave number) in infrared absorption spectrum measurement (detector: TGS, number of integrations: 16 times, decomposition: 4 $cm^{-1}$) using FT/IR4200 type A (trade name) manufactured by JASCO Corporation. Then, the time immediately after the preparation of each coating composition was set to 0 hours, the ratio of absorption peak intensity of isocyanate/absorption peak intensity of isocyanurate at that time was set to X0, the peak intensity ratio after n hours = Xn was obtained, and the retention rate of the isocyanate groups = Xn/X0 was calculated to measure the time during which 80% or more could be retained. Pot life was evaluated according to the following evaluation criteria.

(Evaluation criteria)

◦: 4 hours or more
Δ: 2 hours or more and less than 4 hours
×: Less than 2 hours

[Evaluation 4] Appearance of coating film

Using each of the coating compositions obtained by the above method, coating films having a thickness of 40 μm were coated on glass plates. Then, they were dried in an atmosphere of 23°C and 50% humidity, and a 60 degree gloss value under a condition of JIS Z8741 was measured as the gloss value of the coating films obtained on the next day using a gloss meter (Digital Variable Gloss Meter manufactured by Suga Test Instruments Co., Ltd., UDV-6P (trade name)). The appearance was evaluated according to the following evaluation criteria.

(Evaluation criteria)

◦: 85% or more
Δ: Less than 85% and 65% or more
×: Less than 65%

[Evaluation 5] Hardness of coating film

Using each of the coating compositions obtained by the above method, coating films having a thickness of 40 μm were coated on a mild steel sheet. Then, they were dried in an atmosphere of 23°C and 50% humidity, and after 7 days, the pencil hardness of the obtained coating films was measured by a method according to JIS K 5600-5-4. The hardness increases in the following order. A pencil having a hardness of HB or higher was evaluated as having a good hardness.

(Pencil hardness)

2B <B <HB <F

[Evaluation 6] Water resistance of the coating film

Each of the coating compositions obtained by the above method was coated on glass plates with an applicator so that the thickness was 40 μm. Then, they were dried in an atmosphere of 23°C and 50% humidity for 7 days to obtain coating films. Next, a silicon O-ring having a diameter of 20 mm was placed on the obtained coating films, and 0.5 g of water was poured into the O-ring. Then, they were left at 23°C for 24 hours, and the state of the coating films after removing the water remaining on the surface was observed. The water resistance of the coating film was evaluated according to the following evaluation criteria. However, when the appearance of the coating film in "Evaluation 4" was "×", it could not be measured because visual evaluation was impossible. Regarding the evaluation criteria, "blister" means blisters or swelling generated on the surface of the coating film.

(Evaluation criteria)

◦: No changes
Δ: Cloudy but no blisters
×: Blisters generated, cloudy or coating film was dissolved

<Synthesis of sulfonic acid amine salt>

[Synthesis Example 1-1] Synthesis of HES/DPOA

10 parts by mass of 1-propanol was added to 20 parts by mass of a 70% by mass aqueous solution of 2-hydroxyethanesulfonic acid (hereinafter, may be abbreviated as "HES"), followed by stirring to obtain a solution. Further, N, N-dipropyloctylamine (hereinafter, may be abbreviated as "DPOA") was weighed so that the molar equivalent ratio to HES was 1, and diluted with the same parts by mass of 1-propanol. The obtained liquid was added dropwise to the above-obtained solution while stirring. The stirring was stopped 1 hour after the start of the dropping, and dehydration and solvent removal were carried out with an evaporator to obtain a 2-hydroxyethanesulfonic acid dimethylpropylamine salt (hereinafter, may be abbreviated as "HES/DPOA") having a solid content of 99.8% by mass.

[Synthesis Example 1-2] Synthesis of HES/DMPA

A 2-hydroxyethanesulfonic acid N, N-dipropyloctylamine salt (hereinafter, may be abbreviated as "HES/DMPA") having a solid content of 99.8% by mass was obtained in the same manner as in Synthesis Example 1-1, except that dimethylpropylamine (hereinafter, may be abbreviated as "DMPA") was used instead of DPOA.

[Synthesis Example 1-3] Synthesis of HBS/DMPA and HBS/DMCHA

10 parts by mass of 1-propanol was added to 20 parts by mass of an 85% by mass aqueous solution of HBS, followed by stirring to obtain a solution. Further, DMCHA was weighed so that the molar equivalent ratio to HBS was 0.25, and DMPA was weighed so that the molar equivalent ratio to HBS was 0.75, then they were diluted with 15 parts by mass of 1-propanol. Then, the diluted solution of DMCHA and DMPA were added dropwise to the HBS solution while stirring. The stirring was stopped 1 hour after the start of dropping, and dehydration and solvent removal were carried out with an evaporator to obtain a mixed salt of 4-hydroxybenzenesulfonic acid N, N-dipropyloctylamine/dimethylcyclohexylamine (hereinafter, may be abbreviated as "HBS/DMPA, HBS/DMCHA") having a solid content of 99.6% by mass.

[Synthesis Example 1-4] Synthesis of HES/TnPA

A tripropylamine 2-hydroxyethanesulfonic acid salt (hereinafter, may be abbreviated as "HES/TnPA") having a solid content of 99.9% by mass was obtained in the same manner as in Synthesis Example 1-1, except that tripropylamine (hereinafter, may be abbreviated as "TnPA") was used instead of DPOA.

[Synthesis Example 1-5] Synthesis of HPS/TnPA and HPS/TBA

10 parts by mass of 1-propanol was added to 20 parts by mass of an 80% by mass aqueous solution of 3-hydroxypropanesulfonic acid (hereinafter, may be abbreviated as "HPS"), followed by stirring to obtain a solution. Further, tributylamine (hereinafter sometimes abbreviated as "TBA") was weighed so that the molar equivalent ratio to HPS was 0.15, and TnPA was weighed so that the molar equivalent ratio to HBS was 0.85, then they were diluted with the same parts by mass of 1-propanol to obtain a diluted solution. Then, the diluted solution of TBA and TnPA was added dropwise to the HPS solution while stirring. The stirring was stopped 1 hour after the start of dropping, and dehydration and solvent removal were carried out with an evaporator to obtain a 3-hydroxypropanesulfonic acid tributylamine/tripropylamine amine salt (hereinafter, may be abbreviated as "HPS/TnPA, HPS/TBA") having a solid content of 99.8% by mass.

[Synthesis Example 1-6] Synthesis of HBS/TnPA and HBS/TEA

10 parts by mass of 1-propanol was added to 20 parts by mass of an 85% by mass aqueous solution of 4-hydroxybenzenesulfonic acid (hereinafter, may be abbreviated as "HBS"), followed by stirring to obtain a solution. Further, triethylamine (TEA) was weighed so that the molar equivalent ratio to HBS was 0.05, and TnPA was weighed so that the molar equivalent ratio to HBS was 0.95, then they were diluted with the same parts by mass of 1-propanol. Then, the diluted solution of DMCHA and TnPA were added dropwise to the HBS solution while stirring. The stirring was stopped 1 hour after the start of dropping, and dehydration and solvent removal were carried out with an evaporator to obtain a 4-hydroxybenzenesulfonic acid tripropylamine/triethylamine salt (hereinafter, may be abbreviated as "HBS/TnPA, HBS/TEA") having a solid content of 99.8% by mass.

[Synthesis Example 1-7] Synthesis of HES/4-picoline

A 2-hydroxyethanesulfonic acid tripropylamine salt (hereinafter, may be abbreviated as "HES/4-picoline") having a solid content of 99.9% by mass was obtained in the same manner as in Synthesis Example 1-1 except that 4-picoline was used instead of DPOA.

[Synthesis Example 1-8] Synthesis of HES/4-ethylpyridine

A 2-hydroxyethanesulfonic acid tripropylamine salt (hereinafter, may be abbreviated as "HES/4-ethylpyridine") having a solid content of 99.9% by mass was obtained in the same manner as in Synthesis Example 1-1 except that 4-ethylpyridine was used instead of DPOA.

[Synthesis Example 1-9] Synthesis of HES/4-propylpyridine and HES/TBA

10 parts by mass of 1-propanol was added to 20 parts by mass of a 70% by mass aqueous solution of HES, followed by stirring to obtain a solution. Further, 4-propylpyridine was weighed so that the molar equivalent ratio to HES was 0.93, and tributylamine (hereinafter, may be abbreviated as "TBA") was weighed so that the molar equivalent ratio to HES was 0.07, then they were diluted with 15 parts by mass of 1-propanol. Then, the diluted solution of 4-propylpyridine and TBA was added dropwise to the HES solution while stirring. The stirring was stopped 1 hour after the start of dropping, and dehydration and solvent removal were carried out with an evaporator to obtain a mixed salt of 2-hydroxybenzenesulfonic acid 4-propylpyridine/tributylamine (hereinafter, may be abbreviated as "HES/4-propylpyridine, HES/TBA") having a solid content of 99.6% by mass.

[Synthesis Example 1-10] Synthesis of HBS/DMCHA and HBS/TnPA

10 parts by mass of 1-propanol was added to 20 parts by mass of a 70% by mass aqueous solution of HBS, followed by stirring to obtain a solution. Further, DMCHA was weighed so that the molar equivalent ratio to HBS was 0.33, and TnPA was weighed so that the molar equivalent ratio to HBS was 0.67, then they were diluted with 15 parts by mass of 1-propanol. Then, the diluted solution of DMCHA and TnPA were added dropwise to the HBS solution while stirring. The stirring was stopped 1 hour after the start of dropping, and dehydration and solvent removal were carried out with an evaporator to obtain a 4-hydroxybenzenesulfonic acid dimethylcyclohexylamine/tripropylamine salt (hereinafter, may be abbreviated as "HBS/DMCHA, HBS/TnPA") having a solid content of 99.6% by mass.

[Synthesis Example 1-11] Synthesis of HES/DMCHA

A 2-hydroxyethanesulfonic acid dimethylcyclohexylamine salt (hereinafter, may be abbreviated as "HES/DMCHA") having a solid content of 99.8% by mass was obtained in the same manner as in Synthesis Example 1-1, except that dimethylcyclohexylamine (hereinafter, may be abbreviated as "DMCHA") was used instead of DPOA.

[Synthesis Example 1-12] Synthesis of HES/TBA

A 2-hydroxyethane sulfonic acid tributylamine salt (hereinafter, may be abbreviated as "HES/TBA") having a solid content of 99.8% by mass was obtained in the same manner as in Synthesis Example 1-1 except that tributylamine (hereinafter, may be abbreviated as "TBA") was used instead of DPOA.

[Synthesis Example 1-13] Synthesis of HES/TEA, HES/DMCHA

10 parts by mass of 1-propanol was added to 20 parts by mass of a 70% by mass aqueous solution of HES, followed by stirring to obtain a solution. Further, triethylamine (hereinafter, may be abbreviated as "TEA") was weighed so that the molar equivalent ratio to HES was 0.60, and DMCHA was weighed so that the molar equivalent ratio to HES was 0.40, then they were diluted with 15 parts by mass of 1-propanol. Then, the diluted solution of TEA and DMCHA were added dropwise to the HES solution while stirring. The stirring was stopped 1 hour after the start of dropping, and dehydration and solvent removal were carried out with an evaporator to obtain a mixed salt of 2-hydroxyethanesulfonic acid triethylamine/dimethylcyclohexylamine (hereinafter, may be abbreviated as "HES/TEA, HES/DMCHA") having a solid content of 99.6% by mass.

<Synthesis of polyisocyanate>

[Synthesis Example 1-14] Synthesis of polyisocyanate 1-P-1

The inside of a four-necked flask equipped with a stirrer, a thermometer, a reflux condenser, a nitrogen blowing tube, and a dropping funnel was made into a nitrogen atmosphere, and 1,000 g of HDI and 4.0 g of isobutanol were charged thereto, and the temperature inside the reactor was kept at 70°C while stirring. Then, tetramethylammonium capriate was added thereto, and at the time when the yield reached 50%, phosphoric acid was added to terminate the reaction. Then, the temperature was raised to 160°C and kept for 1 hour. After filtering the reaction solution, unreacted HDI was removed using a thin film evaporator to obtain a polyisocyanate 1-P-1. The viscosity of the obtained polyisocyanate 1-P-1 at 25°C was 900 mPa·s, and the isocyanate group content was 22.3%.

[Synthesis Example 1-15] Synthesis of polyisocyanate 1-P-2

A polyisocyanate 1-P-2 was obtained in the same manner as in Synthesis Example 1-9 except that the reaction was terminated at the time when the yield reached 55% by adding phosphoric acid. The viscosity of the obtained polyisocyanate 1-P-2 at 25°C was 1,200 mPa·s, and the isocyanate group content was 22.6%.

[Synthesis Example 1-16] Synthesis of polyisocyanate 1-P-3

A polyisocyanate 1-P-3 was obtained in the same manner as in Synthesis Example 1-9 except that the reaction was terminated at the time when the yield reached 35% by adding phosphoric acid. The viscosity of the obtained polyisocyanate 1-P-3 at 25°C was 830 mPa·s, and the isocyanate group content was 22.9%.

[Synthesis Example 1-17] Synthesis of polyisocyanate 1-P-4

The inside of a four-necked flask equipped with a stirrer, a thermometer, a reflux condenser, a nitrogen blowing tube, and a dropping funnel was made into a nitrogen atmosphere, and 1,000 g of HDI and 4.0 g of isobutanol were charged thereto, and the temperature inside the reactor was kept at 70°C while stirring. Then tetramethylammonium capriate was added thereto, and at the time when the yield reached 40%, phosphoric acid was added to terminate the reaction. After filtering the reaction solution, unreacted HDI was removed using a thin film evaporator to obtain a polyisocyanate 1-P-4. The viscosity of the obtained polyisocyanate 1-P-4 at 25°C was 2,700 mPa·s, and the isocyanate group content was 21.7%.

[Synthesis Example 1-18] Synthesis of HPS/TnPA

10 parts by mass of 1-propanol was added to 20 parts by mass of an 80% by mass aqueous solution of 3-hydroxypropanesulfonic acid (hereinafter, may be abbreviated as "HPS"), followed by stirring to obtain a solution. Further,

TnPA was weighed so that the molar equivalent ratio to HPS was 1, and diluted with the same parts by mass of 1-propanol. The obtained liquid was added dropwise to the above-obtained solution while stirring. The stirring was stopped 1 hour after the start of dropping, and dehydration and solvent removal were carried out with an evaporator to obtain a 3-hydroxypropanesulfonic acid tripropylamine amine salt (hereinafter, may be abbreviated as "HPS/TnPA") having a solid content of 99.8% by mass.

[Synthesis Example 1-19] Synthesis of HBS/TnPA

10 parts by mass of 1-propanol was added to 20 parts by mass of an 85% by mass aqueous solution of 4-hydroxybenzenesulfonic acid (hereinafter, may be abbreviated as "HBS"), followed by stirring to obtain a solution. Further, TnPA was weighed so that the molar equivalent ratio to HBS was 1, and diluted with the same parts by mass of 1-propanol. The obtained liquid was added dropwise to the above-obtained solution while stirring. The stirring was stopped 1 hour after the start of dropping, and dehydration and solvent removal were carried out with an evaporator to obtain a 4-hydroxybenzenesulfonic acid tripropylamine salt (hereinafter, may be abbreviated as "HBS/TnPA") having a solid content of 99.8% by mass.

[Synthesis Example 2-1] Synthesis of HES/4-picoline

A solution was obtained by adding 10 parts by mass of 1-propanol to 20 parts by mass of a 70% by mass aqueous solution of 2-hydroxyethanesulfonic acid (hereinafter, may be abbreviated as "HES"). Further, 4-picoline was weighed so that the molar equivalent ratio to HES was 1, diluted with the same parts by mass of 1-propanol. The obtained liquid was added dropwise to the above-obtained solution while stirring. The stirring was stopped 1 hour after the start of dropping, and dehydration and solvent removal were carried out with an evaporator to obtain a 2-hydroxyethanesulfonic acid 4-picoline salt (hereinafter, may be abbreviated as "HES/4-picoline") having a solid content of 99.8% by mass.

[Synthesis Example 2-2] Synthesis of HES/4-ethylpyridine

A 2-hydroxyethanesulfonic acid 4-ethylpyridine salt (hereinafter, may be abbreviated as "HES/4-ethylpyridine") having a solid content of 99.8% by mass was obtained in the same manner as in Synthesis Example 2-1 except that 4-ethylpyridine was used instead of 4-picoline.

[Synthesis Example 2-3] Synthesis of HPS/4-propylpyridine

10 parts by mass of 1-propanol was added to 20 parts by mass of an 80% by mass aqueous solution of 3-hydroxypropanesulfonic acid (hereinafter, may be abbreviated as "HPS"), followed by stirring to obtain a solution. Further, 4-propylpyridine was weighed so that the molar equivalent ratio to HPS was 1, and diluted with the same parts by mass of 1-propanol. The obtained liquid was added dropwise to the above-obtained solution while stirring. The stirring was stopped 1 hour after the start of dropping, and dehydration and solvent removal were carried out with an evaporator to obtain a 3-hydroxypropanesulfonic acid 4-propylpyridine salt (hereinafter, may be abbreviated as "HPS/4-propylpyridine") having a solid content of 99.8% by mass.

[Synthesis Example 2-4] Synthesis of HPS/3-butylpyridine

A 3-hydroxypropanesulfonic acid 3-butylpyridine salt (hereinafter, may be abbreviated as "HPS/3-butylpyridine") having a solid content of 99.8% by mass was obtained in the same manner as in Synthesis Example 2-3 except that 3-butylpyridine was used instead of 4-propylpyridine.

[Synthesis Example 2-5] Synthesis of HES/2,4,6-trimethylpyridine

A 2-hydroxyethanesulfonic acid 2,4,6-trimethylpyridine salt (hereinafter, may be abbreviated as "HES/2,4,6-trimethylpyridine") having a solid content of 99.8% by mass was obtained in the same manner as in Synthesis Example 2-1 except that 2,4,6-trimethylpyridine was used instead of 4-picoline.

[Synthesis Example 2-6] Synthesis of HPS/5-ethyl-2-picoline

A 3-hydroxypropanesulfonic acid 5-ethyl-2-picoline salt (hereinafter, may be abbreviated as "HES/5-ethyl-2-picoline") having a solid content of 99.8% by mass was obtained in the same manner as in Synthesis Example 2-3 except that 5-ethyl-2-picoline was used instead of 4-propylpyridine.

[Synthesis Example 2-7] HES/4-propyl pyridine, synthesis of HES/TBA

10 parts by mass of 1-propanl was added to 20 parts by mass of a 70% by mass aqueous solution of HES, followed by stirring to obtain a solution. Further, 4-propylpyridine was weighed so that the molar equivalent ratio to HES was 0.60, and tributylamine (hereinafter, may be abbreviated as "TBA") was weighed so that the molar equivalent ratio to HES was 0.40, then they were diluted with 15 parts by mass of 1-propanol. Then, the diluted solution of 4-propylpyridine and TBA was added dropwise to the HES solution while stirring. The stirring was stopped 1 hour after the start of dropping, and dehydration and solvent removal were carried out with an evaporator to obtain a mixed salt of 2-hydroxybenzenesulfonic acid 4-propylpyridine/tributylamine (hereinafter, may be abbreviated as "HES/4-propyl pyridine, HES/TBA") having a solid content of 99.6% by mass.

[Synthesis Example 2-8] Synthesis of HES/DMCHA

Using the same method as in Synthesis Example 2-1 except that dimethylcyclohexylamine (hereinafter, may be abbreviated as "DMCHA") was used instead of 4-picoline, the solid content was 99.8% by mass. A dimethylcyclohexylamine 2-hydroxyethanesulfonic acid salt (hereinafter, may be abbreviated as "HES/DMCHA") was obtained.

[Synthesis Example 2-9] Synthesis of HES/TBA

A 2-hydroxyethanesulfonic acid tributylamine salt (hereinafter, may be abbreviated as "HES/TBA") having a solid content of 99.8% by mass was obtained in the same manner as in Synthesis Example 2-1 except that TBA was used instead of 4-picoline.

[Synthesis Example 2-10] Synthesis of HES/TEA, HES/DMCHA

10 parts by mass of 1-propanol was added to 20 parts by mass of a 70% by mass aqueous solution of HES, followed by stirring to obtain a solution. Further, triethylamine (hereinafter, may be abbreviated as "TEA") was weighed so that the molar equivalent ratio to HES was 0.60, and DMCHA was weighed so that the molar equivalent ratio to HES was 0.40, then they were diluted with 15 parts by mass of 1-propanol. Then, the diluted solution of TEA and DMCHA were added dropwise to the HES solution while stirring. The stirring was stopped 1 hour after the start of dropping, and dehydration and solvent removal were carried out with an evaporator to obtain a mixed salt of 2-hydroxyethanesulfonic acid triethylamine /dimethylcyclohexylamine (hereinafter, may be abbreviated as "HES/TEA, HES/DMCHA") having a solid content of 99.6% by mass.

[Synthesis Example 2-11] Synthesis of Polyisocyanate 2-P-1

The inside of a four-necked flask equipped with a stirrer, a thermometer, a reflux condenser, a nitrogen blowing tube, and a dropping funnel was made into a nitrogen atmosphere, and 1,000 g of HDI and 4.0 g of isobutanol were charged thereto, and the temperature inside the reactor was kept at 70°C while stirring. Then, tetramethylammonium capriate was added thereto, and at the time when the yield reached 50%, phosphoric acid was added to terminate the reaction. Then, the temperature was raised to 160°C and kept for 1 hour. After filtering the reaction solution, unreacted HDI was removed using a thin film evaporator to obtain a polyisocyanate 2-P-1. The viscosity of the obtained polyisocyanate 2-P-1 at 25°C was 900 mPa·s, and the isocyanate group content was 22.3%.

[Synthesis Example 2-12] Synthesis of Polyisocyanate 2-P-2

A polyisocyanate 2-P-2 was obtained in the same manner as in Synthesis Example 2-11, except that the reaction was terminated at the time when the yield reached 55% by adding phosphoric acid. The viscosity of the obtained polyisocyanate 2-P-2 at 25°C was 1,200 mPa·s, and the isocyanate group content was 22.6%.

[Synthesis Example 2-13] Synthesis of Polyisocyanate 2-P-3

The inside of a four-necked flask equipped with a stirrer, a thermometer, a reflux condenser, a nitrogen blowing tube, and a dropping funnel was made into a nitrogen atmosphere, and 1,000 g of HDI and 4.0 g of isobutanol were charged thereto, and the temperature inside the reactor was kept at 70°C while stirring. Then tetramethylammonium capriate was added thereto, and at the time when the yield reached 40%, phosphoric acid was added to terminate the reaction. After filtering the reaction solution, unreacted HDI was removed using a thin film evaporator to obtain a polyisocyanate 2-P-3. The viscosity of the obtained polyisocyanate 2-P-3 at 25°C was 2,700 mPa·s, and the isocyanate group content was

21.7%.

[Synthesis Example 2-14] Synthesis of HES/4 -propylpyridine and HES/TBA

10 parts by mass of 1-propanol was added to 20 parts by mass of a 70% by mass aqueous solution of HES, followed by stirring to obtain a solution. Further, 4 - propylpyridine was weighed so that the molar equivalent ratio to HES was 0.93, and tributylamine (hereinafter, may be abbreviated as "TBA") was weighed so that the molar equivalent ratio to HES was 0.07, then they were diluted with 15 parts by mass of 1-propanol. Then, the diluted solution of 4 -propylpyridine and TBA was added dropwise to the HES solution while stirring. The stirring was stopped 1 hour after the start of dropping, and dehydration and solvent removal were carried out with an evaporator to obtain a mixed salt of 2-hydroxybenzenesulfonic acid 4 -propylpyridine/tributylamine (hereinafter, may be abbreviated as "HES/4-propyl pyridine, HES/TBA") having a solid content of 99.6% by mass.
.

<Production of polyisocyanate composition>

[Example 1-1] Production of polyisocyanate composition 1-PA-1a

5.5 parts by mass of 2-hydroxyethanesulfonic acid N, N-dipropyloctylamine salt (HESDPOA) obtained in Synthesis Example 1-1 was added to 100 parts by mass of the polyisocyanate 1-P-1 obtained in Synthesis Example 1-14 (molar equivalent ratio of isocyanate group/hydroxyl group = 20), and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-1a. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-2] Production of polyisocyanate composition 1-PA-2a

A polyisocyanate composition 1-PA-2a was produced in the same manner as in Example 1-1, except that 100 parts by mass of the polyisocyanate 1-P-2 obtained in Synthesis Example 1-15 and 5.2 parts by mass of HES/DPOA were used instead of the polyisocyanate 1-P-1 obtained in Synthesis Example 1-14. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-3] Production of polyisocyanate composition 1-PA-3a

A polyisocyanate composition 1-PA-3a was produced in the same manner as in Example 1-1, except that 5.0 parts by mass of 2-hydroxyethanesulfonic acid dimethylpropylamine salt (HES/DMPA) obtained in Synthesis Example 1-2 was used instead of HES/DPOA. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-4] Production of polyisocyanate composition 1-PA-4a

A polyisocyanate composition 1-PA-4a was produced in the same manner as in Example 1-1, except that 6.0 parts by mass of the mixed salt of 4-hydroxybenzenesulfonic acid N, N-dipropyloctylamine/dimethylcyclohexylamine (HBS/DMPA, HBS/DMCHA) obtained in Synthesis Example 1-3 was used instead of HESDPOA. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-5] Production of polyisocyanate composition 1-PA-5a

A polyisocyanate composition 1-PA-5a was produced in the same manner as in Example 1-1, except that 5.0 parts by mass of 2-hydroxyethanesulfonic acid tripropylamine salt (HESTnPA) obtained in Synthesis Example 1-3 was used instead of HES/DPOA. The physical properties of the obtained polyisocyanate composition were measured using the

method described above. The results are shown in Table 1-1. In addition, the obtained polyisocyanate composition was evaluated by the method described above. The results are shown in Table 1-1.

[Example 1-6] Production of polyisocyanate composition 1-PA-6a

A polyisocyanate composition 1-PA-6a was produced in the same manner as in Example 1-1, except that 100 parts by mass of the polyisocyanate 1-P-2 obtained in Synthesis Example 1-15 and 6.0 parts by mass of the 3-hydroxypropanesulfonic acid tributylamine/tripropylamine amine salt (HPS/TnPA, HPS/TBA) obtained in Synthesis Example 1-5 were used instead of HES/DPOA. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-7] Production of polyisocyanate composition 1-PA-7a

A polyisocyanate composition 1-PA-7a was produced in the same manner as in Example 1-1, except that 100 parts by mass of the polyisocyanate 1-P-3 obtained in Synthesis Example 1-16 and 5.2 parts by mass of 4-hydroxybenzenesulfonic acid tripropylamine/triethylamine salt (HBS/TnPA, HBS/TEA) obtained in Synthesis Example 1-6 were used instead of HES/DPOA. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-8] Production of polyisocyanate composition 1-PA-8a

4.5 parts by mass of 2-hydroxyethanesulfonic acid 4-picoline salt ("HES/4-picoline") obtained in Synthesis Example 1-7 was added to 100 parts by mass of the polyisocyanate 1-P-1 obtained in Synthesis Example 1-14, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-8a.

[Example 1-9] Production of polyisocyanate composition 1-PA-9a

5.0 parts by mass of 2-hydroxyethanesulfonic acid tripropylamine salt (HES4-ethylpyridine ") obtained in Synthesis Example 1-8 was added to 100 parts by mass of the polyisocyanate 1-P-2 obtained in Synthesis Example 1-15, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-9a.

[Example 1-10] Production of polyisocyanate composition 1-PA-10a

5.5 parts by mass of 2-hydroxyethanesulfonic acid 4-propylpyridine/tributylamine salt (HES/4-propylpyridine, HES/TBA) obtained in Synthesis Example 1-9 was added to 100 parts by mass of the polyisocyanate 1-P-3 obtained in Synthesis Example 1-16 (molar equivalent ratio of isocyanate group/hydroxyl group = 20), and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-10a.

[Example 1-11] Production of polyisocyanate composition 1-PA-7a

6.0 parts by mass of 3-cyclohexylaminopropanesulfonic acid (hereinafter, may be abbreviated as "CAPS") and 3.3 parts by mass of DMPA were added to 100 parts by mass of the polyisocyanate 1-P-1 obtained in Synthesis Example 1-9, and the resulting mixture was stirred at 100°C for 5 hours while refluxing in a nitrogen atmosphere to carry out a reaction so that the ratio of the molar amount of the isocyanate group to the molar amount of the amino group (isocyanate group/amino group) was 16.7, thereby obtaining a polyisocyanate composition 1-PA-7a. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-12] Production of polyisocyanate composition 1-PA-8a

A polyisocyanate composition 1-PA-8a was produced in the same manner as in Example 1-6, except that 6.2 parts by mass of 4-cyclohexylaminobutanesulfonic acid (hereinafter, may be abbreviated as "CABS") was used instead of CAPS, and 3.5 parts by mass of TnPA was added instead of DMPA. The physical properties of the obtained polyisocyanate composition were measured using the method described above. The results are shown in Table 1-1. In addition, the obtained polyisocyanate composition was evaluated by the method described above. The results are shown in Table 1-1.

[Example 1-13] Production of polyisocyanate composition 1-PA-13a

A polyisocyanate composition 1-PA-13a was produced in the same manner as in Example 1-1, except that 100 parts by mass of the polyisocyanate 1-P-2 obtained in Synthesis Example 1-15 and 5.8 parts by mass of the 3-hydroxypropanesulfonic acid tripropylamineamine salt (HPS/TnPA) obtained in Synthesis Example 1-18 were used. The physical properties of the obtained polyisocyanate composition were measured using the method described above. The results are shown in Table 1-2. In addition, the obtained polyisocyanate composition was evaluated by the method described above. The results are shown in Table 1-2.

[Example 1-14] Production of polyisocyanate composition 1-PA-14a

A polyisocyanate composition 1-PA-14a was produced in the same manner as in Example 1-1, except that 100 parts by mass of the polyisocyanate 1-P-3 obtained in Synthesis Example 1-16 and 6.0 parts by mass of the 4-hydroxybenzenesulfonic acid tripropylamine salt (HBS/TnPA) obtained in Synthesis Example 1-19 were used. The physical properties of the obtained polyisocyanate composition were measured using the method described above. The results are shown in Table 1-2. In addition, the obtained polyisocyanate composition was evaluated by the method described above. The results are shown in Table 1-2.

[Comparative Example 1-1] Production of Polyisocyanate Composition 1-PA-1b

6.5 parts by mass of the 4-hydroxybenzenesulfonic acid dimethylcyclohexylamine/tripropylamine salt (HBS/DMCHA, HBS/TnPA) obtained in Synthesis Example 1-10 was added to 100 parts by mass of the polyisocyanate 1-P-2 obtained in Synthesis Example 1-15, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-1b. The physical properties of the obtained polyisocyanate composition were measured using the method described above. The results are shown in Table 1-2. In addition, the obtained polyisocyanate composition was evaluated by the method described above. The results are shown in Table 1-2.

[Comparative Example 1-2] Production of Polyisocyanate Composition 1-PA-2b

5.5 parts by mass of the 2-hydroxyethanesulfonic acid dimethylcyclohexylamine salt (HES/DMCHA) obtained in Synthesis Example 1-11 was added to100 parts by mass of the polyisocyanate 1-P-1 obtained in Synthesis Example 1-14, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-2b. The physical properties of the obtained polyisocyanate composition were measured using the method described above. The results are shown in Table 1-2. In addition, the obtained polyisocyanate composition was evaluated by the method described above. The results are shown in Table 1-2.

[Comparative Example 1-3] Production of Polyisocyanate Composition 1-PA-3b

6.5 parts by mass of the 2-hydroxyethanesulfonic acid tributylamine salt (HES/TBA) obtained in Synthesis Example 1-12 was added to 100 parts by mass of the polyisocyanate 1-P-1 obtained in Synthesis Example 1-14, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-3b. The physical properties of the obtained polyisocyanate composition were measured using the method described above. The results are shown in Table 1-2. In addition, the obtained polyisocyanate composition was evaluated by the method described above. The results are shown in Table 1-2.

[Comparative Example 1-4] Production of Polyisocyanate Composition 1-PA-4b

4.2 parts by mass of the mixed salt of triethylamine 2-hydroxyethanesulfonic acid/dimethylcyclohexylamine (HES/TEA, HES/DMCHA) obtained in Synthesis Example 1-13 was added to 100 parts by mass of the polyisocyanate 1-P-3 obtained in Synthesis Example 1-16, and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-4b. The physical properties of the obtained polyisocyanate composition were measured using the method described above. The results are shown in Table 1-2. In addition, the obtained polyisocyanate composition was evaluated by the method described above. The results are shown in Table 1-2.

[Table 1-1]

| | | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 | Ex. 1-10 | Ex. 1-11 | Ex. 1-12 |
|---|---|---|---|---|---|---|---|---|---|---|---|---|---|
| Polyisocyanate Composition | | 1-PA-1a | 1-PA-2a | 1-PA-3a | 1-PA-4a | 1-PA-5a | 1-PA-6a | 1-PA-7a | 1-PA-8a | 1-PA-9a | 1-PA-10a | 1-PA-11a | 1-PA-12a |
| Composition | Polyisocyanate | 1-P-1 | 1-P-2 | 1-P-1 | 1-P-1 | 1-P-1 | 1-P-2 | 1-P-3 | 1-P-1 | 1-P-2 | 1-P-3 | 1-P-1 | 1-P-1 |
| | Amine salt of sulfonic acid | HES/ DPOA | HES/ DPOA | HES/ DMPA | HBS/ DMPA | HES/ TnPA | HPS/ TnPA | HBS/ TnPA | HES/ 4-picoline | HES/ 4-ethyl pyridine | HES/ 4-propyl pyridine | – | – |
| | | – | – | – | HBS/ DMCHA | | HPS/ TBA | HBS/ TEA | – | – | HES/ TBA | – | – |
| | Sulfonic acid and amine compound | – | – | – | – | – | – | – | – | – | – | CAPS | CABS |
| | | – | – | – | – | – | – | – | – | – | – | DMPA | TnPA |
| | | – | – | – | – | – | – | – | – | – | – | – | – |
| Physical Property | [Physical Property1] NCO group content [mass%] | 19.8 | 20.1 | 20.6 | 20.6 | 20.1 | 20.3 | 20.4 | 20.6 | 20.4 | 19.3 | 19.8 | 19.5 |
| | [Physical Property2] Non-volatile[mass%] | 99.8 | 99.5 | 99.9 | 99.9 | 99.7 | 99.8 | 99.8 | 99.8 | 99.5 | 99.6 | 99.7 | 99.7 |
| | [Physical Property3] Average number of functional group | 3.2 | 3.4 | 3.3 | 3.3 | 3.1 | 3.2 | 3.4 | 3.2 | 3.4 | 3.2 | 2.8 | 2.7 |
| Evaluation | [Evaluation 1] Appearance of composition | ○ | ○ | ○ | ○ | ○ | ○ | ○ | ○ | ○ | ○ | ○ | ○ |
| | [Evaluation 2] Water dispersibility | ○ | ○ | Δ | Δ | ○ | ○ | ○ | ○ | ○ | ○ | ○ | ○ |
| | [Evaluation 3] Pot life | ○ | ○ | ○ | ○ | ○ | ○ | ○ | ○ | ○ | ○ | Δ | Δ |
| | [Evaluation 4] Appearance of coating film | ○ | ○ | ○ | ○ | ○ | ○ | ○ | ○ | ○ | ○ | ○ | ○ |
| | [Evaluation 5] Pencil hardness of coating film | F | F | HB | HB | F | F | F | HB | HB | F | HB | HB |
| | [Evaluation 6] Water resistance of coating film | Δ | Δ | Δ | Δ | ○ | ○ | ○ | ○ | ○ | ○ | Δ | Δ |

[Table 1-2]

| | | Ex. 1-13 | Ex. 1-14 | Com. Ex. 1-1 | Com. Ex. 1-2 | Com. Ex. 1-3 | Com. Ex. 1-4 |
|---|---|---|---|---|---|---|---|
| Polyisocyanate Composition | | 1-PA-13a | 1-PA-14a | 1-PA-1b | 1-PA-2b | 1-PA-3b | 1-PA-4b |
| Composition | Polyisocyanate | 1-P-2 | 1-P-3 | 1-P-2 | 1-P-1 | 1-P-1 | 1-P-3 |
| | Amine salt of sulfonic acid | HPS/TnPA | HBS/TnPA | HBS/DMCHA | HES/DMCHA | HES/TBA | HES/TEA |
| | | - | - | HBS/TnPA | - | - | HES/DMCHA |
| | Sulfonic acid and amine compound | - | - | - | - | - | - |
| | | - | - | - | - | - | - |
| | | - | - | - | - | - | - |
| Physical Property | [Physical Property1] NCO group content [mass%] | 20.3 | 20.4 | 19.5 | 20 | 19.5 | 19.1 |
| | [Physical Property2] Non-volatile[mass%] | 99.8 | 99.8 | 99.7 | 99.8 | 99.8 | 99.5 |
| | [Physical Property3] Average number of functional group | 3.2 | 3.4 | 2.7 | 2.8 | 2.6 | 3 |
| Evaluation | [Evaluation 1] Appearance of composition | ○ | ○ | × | × | ○ | × |
| | [Evaluation 2] Water dispersibility | ○ | ○ | × | × | ○ | × |
| | [Evaluation 3] Pot life | ○ | ○ | Δ | ○ | × | × |
| | [Evaluation 4] Appearance of the coating film | ○ | ○ | × | × | × | Δ |
| | [Evaluation 5] Pencil hardness of the coating film | F | F | B | B | 2B | B |
| | [Evaluation 6] Water resistance of the coating film | ○ | ○ | Δ | Δ | × | × |

As shown in Table 1-1, in the polyisocyanate compositions 1-PA-1a to 1-PA-14a (Examples 1-1 to 1-14) containing a polyisocyanate having a sulfonic acid anion group in its molecule and a tertiary ammonium cation of the amine compound (1), wherein the amount of the tertiary ammonium cation of the amine compound was 70 mol% or more with respect to the total molar amount of the tertiary ammonium cation of all amine compounds in the composition, appearance and water dispersibility of the composition, pot life when formed into a coating composition, and appearance, hardness and water resistance when formed into a coating film were all good.

Further, in the polyisocyanate compositions 1-PA-1a, 1-PA-2a, 1-PA-5a to 1-PA-7a, 1-PA-13a to 1-PA-14a (Examples 1-1 to 1-2, 1-5 to 1-7, 1-13 to 1-14), using HES/DPOA, HES/TnPA, HPS/TnPA or HBS/TnPA as the sulfonic acid amine salt, water dispersibility and hardness when formed into a coating film were particularly good.

Further, in the polyisocyanate compositions 1-PA-5a, 1-PA-13a to 1-PA-14a (Examples 1-5, 1-13 to 1-14) containing only TnPA as the tertiary ammonium cation of the amine compound (1), water resistance when formed into a coating film was particularly good.

Further, in the polyisocyanate compositions 1-PA-1a to 1-PA-10a and 1-PA-13a to 1-PA-14a (Examples 1-1 to 1-10, 1-13 to 1-14) using one or two types of amine salts of sulfonic acid, pot life when formed into a coating composition was particularly good, compared to the polyisocyanate compositions 1-PA-11a and PA-12a in which the sulfonic acid and the amine compound were used separately.

On the other hand, in the polyisocyanate compositions 1-PA-1b and PA-2b (Comparative Examples 1-1 and 1-2) containing no tertiary ammonium cation of the amine compound (1), it was not possible to obtain a polyisocyanate composition in which appearance, water dispersibility, pot life when formed into a coating composition, and appearance, hardness and water resistance when formed into a coating film were all good.

[Example 2-1] Production of polyisocyanate composition 2-PA-1a

4.5 parts by mass of 2-hydroxyethanesulfonic acid 4-picoline salt ("HES/4-picoline") obtained in Synthesis Example 2-1 was added to 100 parts by mass of the polyisocyanate 2-P-1 obtained in Synthesis Example 2-11 (molar equivalent ratio of isocyanate group/hydroxyl group = 20), and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 2-PA-1a.

[Example 2-2] Production of polyisocyanate composition 2-PA-2a

A polyisocyanate composition 2-PA-2a was produced in the same manner as in Example 2-1, except that 100 parts by mass of the polyisocyanate 2-P-2 obtained in Synthesis Example 2-12 was used instead of the polyisocyanate 2-P-1 obtained in Synthesis Example 2-11, and 4.2 parts by mass of the 2-hydroxyethanesulfonic acid 4-ethylpyridine salt (HES/4-ethylpyridine) obtained in Synthesis Example 2-2 was used instead of HES/4-picoline obtained in Synthesis Example 2-1.

[Example 2-3] Production of polyisocyanate composition 2-PA-3a

A polyisocyanate composition 2-PA-3a was produced in the same manner as in Example 2-1, except that 4.8 parts by mass of 3-hydroxypropanesulfonic acid 4-propylpyridine salt (HPS/4-propylpyridine) obtained in Synthesis Example 2-3 was used instead of HES/4-picoline obtained in Synthesis Example 2-1.

[Example 2-4] Production of polyisocyanate composition 2-PA-4a

A polyisocyanate composition 2-PA-4a was produced in the same manner as in Example 2-1, except that 5.0 parts by mass of 3-butylpropanesulfonic acid 3-butylpyridine salt (HPS/3-butylpyridine) obtained in Synthesis Example 2-4 was used instead of HES/4-picoline obtained in Synthesis Example 2-1.

[Example 2-5] Production of polyisocyanate composition 2-PA-5a

6.0 parts by mass of 3-cyclohexylaminopropanesulfonic acid (hereinafter, may be abbreviated as "CAPS") and 2.5 parts by mass of 4-propylpyridine were added to 100 parts by mass of the polyisocyanate 2-P-2 obtained in Synthesis Example 2-12, and the resulting mixture was stirred at 100°C for 5 hours while refluxing in a nitrogen atmosphere to carry out a reaction so that the ratio of the molar amount of the isocyanate group to the molar amount of the amino group (isocyanate group/amino group) was 16.7, thereby obtaining a polyisocyanate composition 2-PA-5a.

[Example 2-6] Production of polyisocyanate composition 2-PA-6a

A polyisocyanate composition 2-PA-6a was produced in the same manner as in Example 2-5, except that 6.2 parts by mass of 4-cyclohexylaminobutanesulfonic acid (hereinafter, may be abbreviated as "CABS") was used instead of CAPS, and 2.5 parts by mass of 3-butylpyridine was used instead of 4-propylpyridine.

[Example 2-7] Production of polyisocyanate composition 2-PA-7a

A polyisocyanate composition 2-PA-7a was produced in the same manner as in Example 2-1, except that 100 parts by mass of the polyisocyanate 2-P-3 obtained in Synthesis Example 2-13 was used instead of the polyisocyanate 2-P-1 obtained in Synthesis Example 2-11, and 5.6 parts by mass of the 2-hydroxyethanesulfonic acid 2,4,6-trimethylpyridine salt (hereinafter, referred to as "HES/2,4,6-trimethylpyridine") obtained in Synthesis Example 2-5 was used instead of HES/4-picoline obtained in Synthesis Example 2-1.

[Example 2-8] Production of polyisocyanate composition 2-PA-8a

A polyisocyanate composition 2-PA-8a was produced in the same manner as in Example 2-1, except that 5.3 parts by mass of 2-hydroxyethanesulfonic acid 5-ethyl-2-picoline salt (HES/5-ethyl-2-picoline) obtained in Synthesis Example 2-6 was used instead of HES/4-picoline obtained in Synthesis Example 2-1.

[Example 2-9] Production of polyisocyanate composition 1-PA-9a

5.5 parts by mass of 2-hydroxyethanesulfonic acid 4-propylpyridine/tributylamine salt (HES/4-propylpyridine, HES / TBA) obtained in Synthesis Example 2-14 was added to 100 parts by mass of the polyisocyanate 2-P-1 obtained in Synthesis Example 2-12 (molar equivalent ratio of isocyanate group/hydroxyl group = 20), and the resulting mixture was stirred at 120°C for 3 hours while refluxing under a nitrogen atmosphere to carry out a reaction. Then, the reflux was removed and the mixture was stirred at 100°C for 1 hour to continue the reaction, thereby obtaining a polyisocyanate composition 1-PA-9a.

[Comparative Example 2-1] Production of Polyisocyanate Composition 2-PA-1b

A polyisocyanate composition 2-PA-1b was produced in the same manner as in Example 2-1, except that 5.6 parts by mass of the 2-hydroxyethanesulfonic acid dimethylcyclohexylamine salt (HES/DMCHA) obtained in Synthesis Example 2-8 was used instead of HES/4-picoline obtained in Synthesis Example 2-1.

[Comparative Example 2-2] Production of Polyisocyanate Composition 2-PA-2b

A polyisocyanate composition 2-PA-2b was produced in the same manner as in Example 2-1, except that 6.2 parts by mass of the 2-hydroxyethanesulfonic acid tributylamine salt (HES / TBA) obtained in Synthesis Example 2-9 was used instead of HES/4-picoline obtained in Synthesis Example 2-1.

[Comparative Example 2-3] Production of Polyisocyanate Composition 2-PA-3b

A polyisocyanate composition 2-PA-3b was produced in the same manner as in Example 2-1, except that 6.0 parts by mass of the mixed salt of 2-hydroxybenzene sulfonic acid triethylamine/dimethylcyclohexylamine (HES/TEA, HES/DMCHA) obtained in Synthesis Example 2-10 was used instead of HES/4-picoline obtained in Synthesis Example 2-1.

[Comparative Example 2-4] Production of Polyisocyanate Composition 2-PA- 4b

A polyisocyanate composition 2-PA-4b was produced in the same manner as in Example 2-1, except that 100 parts by mass of the polyisocyanate 2-P-3 obtained in Synthesis Example 2-7 was used instead of the polyisocyanate 2-P-1 obtained in Synthesis Example 2-12, and 5.5 parts by mass of the mixed salt of 2-hydroxyethanesulfonic acid 4-propylpyridine/tributylamine (HES/4-propylpyridine, HES/TBA) obtained in Synthesis Example 2-7 was used instead of HES/4-picoline obtained in Synthesis Example 2-1.

The physical properties of each polyisocyanate composition obtained in the Examples and Comparative Examples were measured using the methods described above. The results are shown in Table 2. In addition, the polyisocyanate compositions obtained in the Examples and Comparative Examples were evaluated using the method described above. The results are shown in Table 2.

[Table 2]

| | | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Com. Ex. 2-1 | Com. Ex. 2-2 | Com. Ex. 2-3 | Com. Ex. 2-4 |
|---|---|---|---|---|---|---|---|---|---|---|---|---|---|---|
| Polyisocyanate Composition | | 2-PA-1a | 2-PA-2a | 2-PA-3a | 2-PA-4a | 2-PA-5a | 2-PA-6a | 2-PA-7a | 2-PA-8a | 2-PA-9a | 2-PA-1b | 2-PA-2b | 2-PA-3b | 2-PA-4b |
| Composition | Polyisocyanate | 2-P-1 | 2-P-2 | 2-P-1 | 2-P-1 | 2-P-2 | 2-P-2 | 2-P-3 | 2-P-1 | 2-P-1 | 2-P-1 | 2-P-1 | 2-P-1 | 2-P-3 |
| | Amine salt of sulfonic acid | HES/4-picoline | HES/4-ethylpyridine | HPS/4-propyl pyridine | HPS/3-butyl pyridine | – | – | HES/2,4,6-trimethylpyridine | HPS/5-ethyl2-picoline | HES/4-propyl pyridine | HES/DMCHA | HES/TBA | HES/TEA | HES/4-propyl pyridine |
| | | – | – | – | – | – | – | – | – | HES/ TBA | – | – | HES/ DMCHA | HES/ TBA |
| | Sulfonic acid | – | – | – | – | CAPS | CABS | – | – | – | – | – | – | – |
| | Amine compound | – | – | – | – | 4-propyl pyridine | 3-butyl pyridine | – | – | – | – | – | – | – |
| Physical Property | [Physical Property1] NCO% [mass%] | 20.6 | 20.4 | 20.2 | 19.8 | 19.8 | 19.5 | 19.5 | 19.6 | 19.3 | 19.2 | 19.0 | 19.1 | 19.3 |
| | [Physical Property2] Non-volatile [mass%] | 99.8 | 99.5 | 99.9 | 99.7 | 99.8 | 99.8 | 99.7 | 99.7 | 99.6 | 99.8 | 99.8 | 99.5 | 99.6 |
| | [Physical Property3] NCO Average number of functional group | 3.2 | 3.4 | 3.3 | 3.1 | 3.2 | 3.4 | 3.0 | 3.1 | 3.2 | 3.1 | 3.0 | 3.0 | 3.2 |
| Evaluation | [Evaluation 1] Pot life | ○ | ○ | ○ | ○ | ○ | ○ | ○ | ○ | ○ | ○ | × | × | Δ |
| | [Evaluation 2] Appearance of the coating film | ○ | ○ | ○ | ○ | ○ | ○ | ○ | ○ | ○ | × | × | Δ | Δ |
| | [Evaluation 3] Water resistance of the coating film | ○ | ○ | ○ | ○ | ○ | ○ | ○ | ○ | ○ | Δ | × | × | Δ |

As shown in Table 2, the coating compositions using the polyisocyanate compositions 2-PA-a1 to 2-PA-a9

containing a polyisocyanate having a sulfonic acid anion group in its molecule and a tertiary ammonium cation of amine compound (2), wherein an amount of the tertiary ammonium cation of the amine compound was 70 mol% or more with respect to a total molar amount of the tertiary ammonium cation of all amine compounds in the composition, demonstrated good pot life, and excellent appearance and water resistance when formed into a coating film.

Further, the polyisocyanate compositions 2-PA-a1 to 2-PA-a2 using HES/4-picoline or HES/4-ethylpyrimidine demonstrated particularly excellent water resistance when formed into a coating film.

On the other hand, the polyisocyanate compositions 2-PA-b1 to 2-PA-b3 containing a polyisocyanate having a sulfonic acid anion group in its molecule and a tertiary ammonium cation of an amine compound other than the amine compound (2), but containing no tertiary ammonium cation of the amine compound (2), did not simultaneously demonstrate good pot life when formed into a coating composition, and good appearance and water resistance when formed into a coating film.

[Industrial applicability]

According to the polyisocyanate composition of the present embodiment, a polyisocyanate composition having excellent pot life and dispersibility when dispersed in water or a main agent containing water, and having excellent appearance, hardness and water resistance when formed into a coating film can be obtained. The coating composition of the present embodiment may be suitably used for coating materials for buildings, coating materials for automobiles, coating materials for automobile repair, coating materials for plastic, pressure-sensitive adhesives, adhesives, building materials, household aqueous coating materials, other coating agents, sealing agents, ink, casting materials, elastomers, forms, plastic raw materials, and fiber treatment agents.

Further, according to the polyisocyanate composition of the present embodiment, a polyisocyanate composition having excellent pot life and dispersibility when dispersed in water or a main agent containing water, and having excellent appearance, hardness and water resistance when formed into a coating film can be provided. The coating composition of the present embodiment may be used for coating materials for buildings, coating materials for automobiles, coating materials for automobile repair, coating materials for plastic, pressure-sensitive adhesives, adhesives, building materials, household aqueous coating materials, other coating agents, sealing agents, ink, casting materials, elastomers, forms, plastic raw materials, and fiber treatment agents.

## Claims

**1.** A polyisocyanate composition, comprising

a polyisocyanate having a sulfonic acid anion group in its molecule and
a tertiary ammonium cation of an amine compound, wherein
the polyisocyanate is at least one selected from the group consisting of an aliphatic polyisocyanate and an alicyclic polyisocyanate,
the tertiary ammonium cation of an amine compound includes a tertiary ammonium cation of at least one amine compound selected from amine compounds represented by the following general formulas (1) and (2), and
an amount of the tertiary ammonium cation of the selected amine compound is 70 mol% or more with respect to a total molar amount of the tertiary ammonium cation of all amine compounds in the composition,

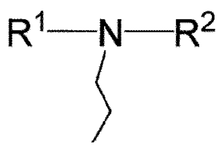

(1)

wherein in the general formula (1), $R^1$ and $R^2$ are each independently a hydrocarbon group having 1 to 8 carbon atoms which may contain an ether bond, at least one selected from the group consisting of $R^1$ and $R^2$ may contain a ring structure, and $R^1$ and $R^2$ may be bonded to each other to form a ring structure, the ring structure being an aromatic ring, a cycloalkyl group having 5 to 6 carbon atoms, and a 5- or 6-membered ring in which $R^1$ and $R^2$ are bonded to each other,

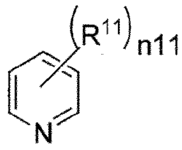

(2)

wherein in the general formula (2), n11 is an integer of 0 or more and 5 or less, $R^{11}$ is a hydrocarbon group having 1 to 8 carbon atoms which may contain an ether bond, and when n11 is 2 or more, a plurality of $R^{11}$ may be the same or different.

2. The polyisocyanate composition according to claim 1, wherein the amount of the tertiary ammonium cation of the selected amine compound is 91 mol% or more with respect to the total molar amount of all amine compounds in the composition.

3. The polyisocyanate composition according to claim 1 or 2, wherein the amine compound represented by the general formula (1) is an amine compound represented by the following general formula (3),

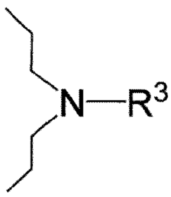

(3)

wherein in the general formula (3), $R^3$ is a hydrocarbon group having 1 to 8 carbon atoms which may contain a ring structure, the ring structure being an aromatic ring or a cycloalkyl group having 5 or 6 carbon atoms.

4. The polyisocyanate composition according to any one of claims 1 to 3, wherein the sulfonic acid anion group is a salt of a sulfonic acid having an active hydrogen group and at least one amine compound selected from the amine compounds represented by the general formulas (1) and (2).

5. The polyisocyanate composition according to claim 4, wherein the active hydrogen group is a hydroxyl group.

6. The polyisocyanate composition according to claim 5, wherein the sulfonic acid having an active hydrogen group is a compound represented by the following general formula (4),

$$HO-R^4-SO_3H \qquad (4)$$

wherein in the general formula (4), $R^4$ is a hydrocarbon group having 1 to 10 carbon atoms which may contain at least one selected from the group consisting of a hydroxyl group, an ether bond, an ester bond, a carbonyl group, and an imino group, $R^4$ may include a ring structure, the ring structure being an aromatic ring, a 5- or 6-membered ring containing two nitrogen atoms, or a 5- or 6-membered ring containing a nitrogen atom and an oxygen atom.

7. The polyisocyanate composition according to any one of claims 1 to 3, wherein the polyisocyanate having a sulfonic acid anion group in its molecule is obtained by reacting a sulfonic acid having an active hydrogen group with a polyisocyanate.

8. The polyisocyanate composition according to claim 7, wherein the active hydrogen group is an amino group.

9. The polyisocyanate composition according to claim 8, wherein the sulfonic acid having an active hydrogen group is a compound represented by the following general formula (5),

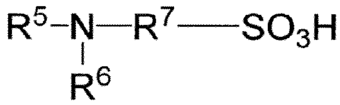

(5)

wherein in the general formula (5), $R^5$ and $R^6$ are each independently a hydrogen atom or a hydrocarbon group having 1 to 12 carbon atoms which may contain a hydroxyl group, at least one of $R^5$ and $R^6$ is a hydrogen atom, and $R^7$ is a hydrocarbon group having 1 to 12 carbon atoms which may contain a hydroxyl group.

**10.** A coating composition comprising the polyisocyanate composition defined in any one of claims 1 to 9.

**11.** A coating substrate coated with the coating composition defined in claim 10.

## Patentansprüche

**1.** Polyisocyanatzusammensetzung, umfassend:

ein Polyisocyanat mit einer Sulfonsäureaniongruppe in dessen Molekül und
ein tertiäres Ammoniumkation einer Aminverbindung, wobei
das Polyisocyanat mindestens eines ist, ausgewählt aus der Gruppe bestehend aus einem aliphatischen Polyisocyanat und einem alicyclischen Polyisocyanat,
das tertiäre Ammoniumkation einer Aminverbindung ein tertiäres Ammoniumkation von mindestens einer Aminverbindung beinhaltet, ausgewählt aus Aminverbindungen der folgenden allgemeinen Formeln (1) und (2), und
die Menge des tertiären Ammoniumkations der ausgewählten Aminverbindung 70 Mol-% oder in Bezug auf die gesamte molare Menge des tertiären Ammoniumkations aller Aminverbindungen in der Zusammensetzung beträgt,

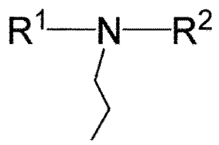

(1)

wobei in der allgemeinen Formel (1) $R^1$ und $R^2$ jeweils unabhängig eine Kohlenwasserstoffgruppe mit 1 bis 8 Kohlenstoffatomen sind, die eine Etherbindung enthalten kann, wobei mindestens eines, ausgewählt aus der Gruppe bestehend aus $R^1$ und $R^2$, eine Ringstruktur enthalten kann, wobei $R^1$ und $R^2$ unter Bildung einer Ringstruktur aneinander gebunden sein können, wobei die Ringstruktur ein aromatischer Ring, eine Cycloalkylgruppe mit 5 bis 6 Kohlenstoffatomen und ein 5- oder 6-gliedriger Ring, in dem $R^1$ und $R^2$ aneinander gebunden sind, ist,

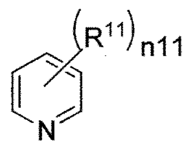

(2)

wobei in der allgemeinen Formel (2) n11 eine ganze Zahl von 0 oder mehr und 5 oder weniger ist, $R^{11}$ eine Kohlenwasserstoffgruppe mit 1 bis 8 Kohlenstoffatomen ist, die eine Etherbindung enthalten kann, und, wenn n11 2 oder mehr ist, eine Mehrzahl von $R^{11}$ gleich oder verschieden sein können.

**2.** Polyisocyanatzusammensetzung nach Anspruch 1, wobei die Menge des tertiären Ammoniumkations der ausgewählten Aminverbindung 91 Mol-% oder mehr in Bezug auf die gesamte molare Menge aller Aminverbindungen in der Zusammensetzung beträgt.

**3.** Polyisocyanatzusammensetzung nach Anspruch 1 oder 2, wobei die durch die allgemeine Formel (1) dargestellte Aminverbindung eine durch die folgende allgemeine Formel (3) dargestellte Aminverbindung ist,

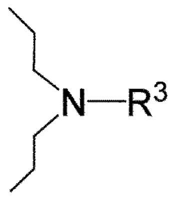

(3)

wobei in der allgemeinen Formel (3) $R^3$ eine Kohlenwasserstoffgruppe mit 1 bis 8 Kohlenstoffatomen ist, die eine Ringstruktur enthalten kann, wobei die Ringstruktur ein aromatischer Ring oder eine Cycloalkylgruppe mit 5 oder 6 Kohlenstoffatomen ist.

**4.** Polyisocyanatzusammensetzung nach einem der Ansprüche 1 bis 3, wobei die Sulfonsäureaniongruppe ein Salz einer Sulfonsäure, die eine Gruppe mit aktivem Wasserstoff aufweist, und mindestens einer Aminverbindung ist, die aus den durch die allgemeinen Formeln (1) und (2) dargestellten Aminverbindungen ausgewählt ist.

**5.** Polyisocyanatzusammensetzung nach Anspruch 4, wobei die Gruppe mit aktivem Wasserstoff eine Hydroxylgruppe ist.

**6.** Polyisocyanatzusammensetzung nach Anspruch 5, wobei die Sulfonsäure, die eine Gruppe mit aktivem Wasserstoff aufweist, eine Verbindung ist, die durch die folgende allgemeine Formel (4) dargestellt wird,

$$HO—R^4—SO_3H \qquad (4)$$

wobei in der allgemeinen Formel (4) $R^4$ eine Kohlenwasserstoffgruppe mit 1 bis 10 Kohlenstoffatomen ist, die mindestens eines enthalten kann, ausgewählt aus der Gruppe bestehend aus einer Hydroxylgruppe, einer Etherbindung, einer Esterbindung, einer Carbonylgruppe und einer Iminogruppe, wobei $R^4$ eine Ringstruktur beinhalten kann, wobei die Ringstruktur ein aromatischer Ring, ein 5- oder 6-gliedriger Ring, der zwei Stickstoffatome enthält, oder ein 5- oder 6-gliedriger Ring, der ein Stickstoffatom und ein Sauerstoffatom enthält, ist.

**7.** Polyisocyanatzusammensetzung nach einem der Ansprüche 1 bis 3, wobei das Polyisocyanat mit einer Sulfonsäureaniongruppe in dessen Molekül durch Umsetzen einer Sulfonsäure, die eine Gruppe mit aktivem Wasserstoff aufweist, mit einem Polyisocyanat erhalten wird.

**8.** Polyisocyanatzusammensetzung nach Anspruch 7, wobei die Gruppe mit aktivem Wasserstoff eine Aminogruppe ist.

**9.** Polyisocyanatzusammensetzung nach Anspruch 8, wobei die Sulfonsäure, die eine Gruppe mit aktivem Wasserstoff aufweist, eine Verbindung ist, die durch die folgende allgemeine Formel (5) dargestellt wird,

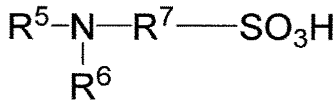

(5)

wobei in der allgemeinen Formel (5) $R^5$ und $R^6$ jeweils unabhängig ein Wasserstoffatom oder eine Kohlenwasserstoffgruppe mit 1 bis 12 Kohlenstoffatomen, die eine Hydroxylgruppe enthalten kann, sind, wobei mindestens eines von $R^5$ und $R^6$ ein Wasserstoffatom ist, und $R^7$ eine Kohlenwasserstoffgruppe mit 1 bis 12 Kohlenstoffatomen ist, die eine Hydroxylgruppe enthalten kann.

**10.** Beschichtungszusammensetzung, welche die in einem der Ansprüche 1 bis 9 definierte Polyisocyanatzusammensetzung enthält.

**11.** Beschichtungssubstrat, welches mit der in Anspruch 10 definierten Beschichtungszusammensetzung beschichtet ist.

## Revendications

**1.** Composition de polyisocyanate, comprenant

un polyisocyanate ayant un groupe anionique d'acide sulfonique dans sa molécule et
un cation d'ammonium tertiaire d'un composé amine, dans laquelle le polyisocyanate est au moins un polyisocyanate choisi dans le groupe constitué d'un polyisocyanate aliphatique et d'un polyisocyanate alicyclique, le cation d'ammonium tertiaire d'un composé amine inclut un cation d'ammonium tertiaire d'au moins un composé amine choisi parmi des composés amines représentés par les formules générales (1) et (2) suivantes, et une quantité du cation d'ammonium tertiaire du composé amine choisi est supérieur ou égal à 70 % en mole par rapport à la quantité molaire totale du cation d'ammonium tertiaire de tous les composés amines dans la composition,

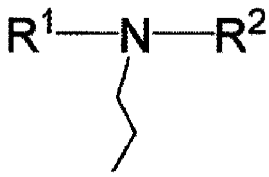

(1)

dans laquelle dans la formule générale (1), $R^1$ et $R^2$ sont chacun indépendamment un groupe hydrocarboné ayant 1 à 8 atomes de carbone qui peut contenir une liaison éther, au moins un élément choisi dans le groupe constitué de $R^1$ et $R^2$ peut contenir une structure cyclique, et $R^1$ et $R^2$ peuvent être liés l'un à l'autre pour former une structure cyclique, la structure cyclique étant une cycle aromatique, un groupe cycloalkyle ayant 5 à 6 atomes de carbone et un cycle à 5 ou 6 chaînons où $R^1$ et $R^2$ sont liés l'un à l'autre,

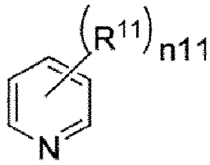

(2)

dans laquelle dans la formule générale (2), n11 est un nombre entier supérieur ou égal à 0 et inférieur ou égal à 5, $R^{11}$ est un groupe hydrocarboné ayant 1 à 8 atomes de carbone qui peut contenir une liaison éther, et lorsque n11 est supérieur ou égal à 2, une pluralité de $R^{11}$ peuvent être identiques ou différents.

**2.** Composition de polyisocyanate selon la revendication 1, dans laquelle la quantité de cation d'ammonium tertiaire du composé amine choisi est supérieure ou égale à 91 % en mole par rapport à la quantité molaire totale de tous les composés amines dans la composition.

**3.** Composition de polyisocyanate selon la revendication 1 ou 2, dans laquelle le composé amine représenté par la formule générale (1) est un composé amine représenté par la formule générale (3) suivante,

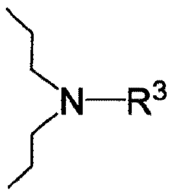

(3)

dans laquelle dans la formule générale (3), $R^3$ est un groupe hydrocarboné ayant 1 à 8 atomes de carbone qui peut contenir une structure cyclique, la structure cyclique étant un cycle aromatique ou un groupe cycloalkyle ayant 5 ou 6 atomes de carbone.

**4.** Composition de polyisocyanate selon l'une quelconque des revendications 1 à 3, dans laquelle le groupe anionique d'acide sulfonique est un sel d'un acide sulfonique ayant un groupe hydrogène actif et au moins un composé amine

choisi parmi les composés amines représentés par les formules générales (1) et (2).

5. Composition de polyisocyanate selon la revendication 4, dans laquelle le groupe hydrogène actif est un groupe hydroxyle.

6. Composition de polyisocyanate selon la revendication 5, dans laquelle l'acide sulfonique ayant un groupe hydrogène actif est un composé représenté par la formule générale (4) suivante,

$$HO—R^4—SO_3H \qquad (4)$$

dans laquelle dans la formule générale (4), $R^4$ est un groupe hydrocarboné ayant 1 à 10 atomes de carbone qui peut contenir au moins un élément choisi dans le groupe constitué d'un groupe hydroxyle, d'une liaison éther, d'une liaison ester, d'un groupe carbonyle et d'un groupe imino, $R^4$ peut inclure une structure cyclique, la structure cyclique étant un cycle aromatique, un cycle à 5 ou 6 chaînons contenant deux atomes d'azote, ou un cycle à 5 ou 6 chaînons contenant un atome d'azote et un atome d'oxygène.

7. Composition de polyisocyanate selon l'une quelconque des revendications 1 à 3, dans laquelle le polyisocyanate ayant un groupe anionique d'acide sulfonique dans sa molécule est obtenu en faisant réagir un acide sulfonique ayant un groupe hydrogène actif avec un polyisocyanate.

8. Composition de polyisocyanate selon la revendication 7, dans laquelle le groupe hydrogène actif est un groupe amino.

9. Composition de polyisocyanate selon la revendication 8, dans laquelle l'acide sulfonique ayant un groupe hydrogène actif est un composé représenté par la formule générale (5) suivante,

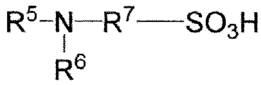

(5)

dans laquelle dans la formule générale (5), $R^5$ et $R^6$ sont chacun indépendamment un atome d'hydrogène ou un groupe hydrocarboné ayant 1 à 12 atomes de carbone qui peut contenir un groupe hydroxyle, au moins un élément parmi $R^5$ et $R^6$ est un atome d'hydrogène et $R^7$ est un groupe hydrocarboné ayant 1 à 12 atomes de carbone qui peut contenir un groupe hydroxyle.

10. Composition de revêtement comprenant la composition de polyisocyanate définie selon l'une quelconque des revendications 1 à 9.

11. Substrat de revêtement revêtu avec la composition de revêtement définie selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H8176267 A
- JP 2015205957 A
- JP 2016017157 A
- JP 4806511 B
- WO 2015035673 A
- US 3998871 A